# EUROPEAN PATENT APPLICATION

(11) **EP 4 517 502 A1**
(43) Date of publication of application: **05.03.2025**
(21) Application number: 24719865.8
(22) Date of filing: 12.04.2024
(51) Int. Cl.: G06F 3/04842, G06F 9/451, G06F 1/16

(54) **ELECTRONIC DEVICE FOR MOVING VISUAL OBJECT DISPLAYED ON FLEXIBLE DISPLAY AND METHOD THEREFOR**

(30) Priority: 11.07.2023 KR 20230090115; 14.08.2023 KR 20230106521
(71) Applicant: Samsung Electronics Co., Ltd., Suwon-si, Gyeonggi-do 16677 (KR)
(72) Inventor: JEONG, Jongil, Suwon-si, Gyeonggi-do 16677 (KR); BANG, Hyosang, Suwon-si, Gyeonggi-do 16677 (KR); PARK, Jihea, Suwon-si, Gyeonggi-do 16677 (KR)
(74) Representative: Gulde & Partner
(86) International application number: PCT/KR2024/004989
(87) International publication number: WO 2025/014043

(57) **Abstract**

According to an embodiment, at least one processor of an electronic device identifies a state of the electronic device based on a first angle between a first housing and a second housing. The at least one processor, in an unfolded state of a foldable housing including the first housing and the second housing rotatably coupled to the first housing, when at least one application is executed, displays at least one visual object associated with the executed application on a flexible display of the electronic device. The at least one processor changes visual characteristic of the at least one visual object in response to the first angle between the first housing and the second housing which is changed to be greater than or equal to a preset angle and returned to the unfolded state within a preset duration.

## Description

### [Technical Field]

The present disclosure relates to an electronic device for moving a visual object displayed on a flexible display and a method thereof.

### [Background Art]

A shape and/or size of an electronic device is diversifying. In order to enhance mobility, an electronic device with reduced size and/or reduced volume is being designed. The electronic device may include a display for visualizing information. As a number of functions supported by the electronic device increases, size of the display may increase in order to visualize more information to a user and/or to support execution of the functions. For example, it may be designed to maintain or increase the size of the display while reducing the size and/or volume of the electronic device.

The above-described information may be provided as a related art for the purpose of helping understand the present disclosure. No argument or decision is made as to whether any of the above-described content may be applied as a prior art related to the present disclosure.

### [Disclosure]

### [Technical Solution]

According to an embodiment, an electronic device may comprise a foldable housing at least including a first housing, a second housing rotatably coupled to the first housing, a flexible display positioned on the foldable housing, one or more sensors for sensing a first angle between the first housing and the second housing, a memory for storing instructions, and at least one processor executing the instructions by accessing the memory. The at least one processor may be configured to identify a state of the electronic device based on the first angle. The at least one processor may be configured to, in an unfolded state of the foldable housing, when at least one application is executed, display at least one visual object on the flexible display that is associated with the executed application. The at least one processor may be configured to change visual characteristic of the at least one visual object in response to the first angle between the first housing and the second housing which is changed to be greater than or equal to a preset angle and returned to the unfolded state within a preset duration.

According to an embodiment, a method of an electronic device may comprise identifying a state of the electronic device based on a first angle between a first housing and a second housing of a foldable housing of the electronic device. The method may comprise, in an unfolded state of the foldable housing, displaying, when at least one application is executed, at least one visual object on a flexible display of the electronic device that is associated with the executed application. The method may comprise changing visual characteristic of the at least one visual object in response to the first angle between the first housing and the second housing which is changed to be greater than or equal to a preset angle and returned to the unfolded state within a preset duration.

According to an embodiment, an electronic device may comprise a housing including a first housing, a second housing rotatably coupled to the first housing and a third housing rotatably coupled to the second housing, a flexible display extended from the first housing to the third housing crossing the second housing, one or more sensors, and at least one processor. The at least one processor may be configured to display, when directions of front surfaces of the first housing in which the flexible display is located, the second housing and the third housing are parallel to each other, a screen in entire active area of the flexible display. The at least one processor may be configured to identify, while displaying the screen including a visual object for receiving a touch input, based on the one or more sensors, at least one of first motion temporarily bending the first housing with respect to the second housing or second motion temporarily bending the third housing with respect to the second housing. The at least one processor may be configured to move, based on identifying the first motion among the first motion or the second motion, the visual object displayed based on center of the entire active area to a first position adjacent to an edge of the first housing. The at least one processor may be configured to move, based on identifying the second motion among the first motion or the second motion, the visual object displayed based on the center to a second position adjacent to an edge of the third housing.

According to an embodiment, the method of the electronic device may comprise displaying a visual object for receiving a touch input on a flexible display extended from the first housing to the third housing crossing the second housing while a first angle between the first housing and the second housing of the electronic device and a second angle between the second housing and the third housing of the electronic device correspond to a preset angle associated with an unfolded state of the electronic device. The method may comprise identifying, while displaying the visual object, a first gesture rotating the first housing with respect to the second housing such that a difference between the first angle and the preset angle is changed to be greater than a threshold angle. The method may comprise, based on identifying a second gesture rotating the first housing with respect to the second housing such that the first angle is changed to the preset angle, wherein the second gesture is performed with a time difference shorter than a preset time difference with respect to the first gesture, changing a position of the visual object on the flexible display to another position adjacent to an edge of the first housing.

According to an embodiment, an electronic device may comprise a housing including a first housing, a second housing rotatably coupled to the first housing and a third housing rotatably coupled to the second housing, a flexible display extended from the first housing to the third housing crossing the second housing, one or more sensors, and at least one processor. The at least one processor may be configured to display, when directions of front surfaces of the first housing in which the flexible display is located, the second housing and the third housing are parallel to each other, a screen in entire active area of the flexible display. The at least one processor may be configured to identify, while displaying the screen including a visual object for receiving a touch input, based on the one or more sensors, at least one of first motion temporarily bending the first housing with respect to the second housing or second motion temporarily bending the third housing with respect to the second housing. The at least one processor may be configured to move, based on identifying the first motion among the first motion or the second motion, the visual object displayed based on center of the entire active area to a first position adjacent to an edge of the first housing. The at least one processor may be configured to move, based on identifying the second motion among the first motion or the second motion, the visual object displayed based on the center to a second position adjacent to an edge of the third housing.

According to an embodiment, the method of the electronic device may comprise displaying, when directions of front surfaces of the first housing in which the flexible display of the electronic device is located, the second housing and the third housing are parallel to each other, a screen in entire active area of the flexible display. The method may comprise identifying, while displaying the screen including a visual object for receiving a touch input, based on the one or more sensors of the electronic device, at least one of first motion temporarily bending the first housing with respect to the second housing or second motion temporarily bending the third housing with respect to the second housing. The method may comprise moving, based on identifying the first motion among the first motion or the second motion, the visual object displayed based on center of the entire active area to a first position adjacent to an edge of the first housing. The method may comprise moving, based on identifying the second motion among the first motion or the second motion, the visual object displayed based on the center to a second position adjacent to an edge of the third housing.

According to an embodiment, an electronic device may comprise a housing including a first housing, a second housing rotatably coupled to the first housing and a third housing rotatably coupled to the second housing, a flexible display extended from the first housing to the third housing crossing the second housing, one or more sensors, and at least one processor. The at least one processor may be configured to display, when directions of front surfaces of the first housing in which the flexible display is located, the second housing and the third housing are parallel to each other, screens on different portions of the flexible display, respectively. The at least one processor may be configured to identify, while displaying the screen, based on the one or more sensors, at least one of first motion temporarily bending the first housing with respect to the second housing or second motion temporarily bending the third housing with respect to the second housing. The at least one processor may be configured to increase, based on identifying the first motion among the first motion or the second motion, size of a first screen displayed on a first portion of the front surface of the first housing among the portions by size of the front surface of the first housing. The at least one processor may be configured to increase, based on identifying the second motion among the first motion or the second motion, size of a second screen displayed on a second portion different from the first portion by the size of the front surface of the first housing.

According to an embodiment, the method of the electronic device may comprise displaying, when directions of front surfaces of the first housing in which the flexible display of the electronic device is located, the second housing and the third housing are parallel to each other, screens on different portions of the flexible display, respectively. The method may comprise identifying, while displaying the screen, based on the one or more sensors of the electronic device, at least one of first motion temporarily bending the first housing with respect to the second housing or second motion temporarily bending the third housing with respect to the second housing. The method may comprise increasing, based on identifying the first motion among the first motion or the second motion, size of a first screen displayed on a first portion of the front surface of the first housing among the portions by size of the front surface of the first housing. The method may comprise increasing, based on identifying the second motion among the first motion or the second motion, size of a second screen displayed on a second portion different from the first portion by the size of the front surface of the first housing.

According to an embodiment, a multi-foldable electronic device may comprise a multi-foldable housing including a first housing including a first surface and a second surface, a second housing including a third surface and a fourth surface, rotatably coupled to one end of the first housing, and a third housing including a fifth surface and a sixth surface, rotatably coupled to the other end of the second housing, a flexible display disposed on the multi-foldable housing, at least one or more sensors for sensing a first angle between the first housing and the second housing or a second angle between the second housing and the third housing, a memory for storing executable instructions, and at least one processor that accesses the memory and executes the instructions. The at least one processor may be configured to display a visual object associated with the at least one executed application on the flexible display in response to executing at least one application in an unfolded state of the first housing, the second housing, and the third housing. The at least one processor may be configured to change a display area of the visual object in case that the first angle between the first housing and the second housing or the second angle between the second housing and the third housing is changed in the unfolded state.

According to an embodiment, a method of a multi-foldable electronic device may comprise displaying a visual object associated with the at least one application on a flexible display on a first surface of the first housing, a second surface of the second housing, and a third surface of the third housing in response to executing at least one application in an unfolded state of the first housing, the second housing, and the third housing. The method may comprise changing a display area of the visual object in case that the first angle between the first housing and the second housing or the second angle between the second housing and the third housing is changed in the unfolded state.

### [Description of the Drawings]

FIG. 1 illustrates an embodiment of a deformable electronic device.
FIG. 2 illustrates an example of a block diagram of an electronic device according to an embodiment.
FIGS. 3A and 3B illustrate an embodiment of a deformable electronic device.
FIG. 4 illustrates a flowchart of an electronic device according to an embodiment.
FIG. 5 illustrates an exemplary flowchart for describing an operation of an electronic device, according to an embodiment, based on a program.
FIG. 6 illustrates an example of an operation of an electronic device for obtaining information associated with an angle between housings.
FIG. 7 exemplarily illustrates states of an electronic device switched based on rotation between housings.
FIG. 8 exemplarily illustrates states of an electronic device switched based on rotation between housings.
FIG. 9 exemplarily illustrates states of an electronic device switched based on rotation between housings.
FIG. 10 exemplarily illustrates states of an electronic device switched based on rotation between housings.
FIG. 11 exemplarily illustrates states of an electronic device switched based on rotation between housings.
FIG. 12 exemplarily illustrates states of an electronic device switched based on rotation between housings.
FIG. 13 exemplarily illustrates states of an electronic device switched based on rotation between housings.
FIGS. 14A and 14B illustrate an embodiment of a deformable electronic device.
FIG. 15 illustrates a flowchart of an electronic device according to an embodiment.
FIG. 16 illustrates an embodiment of a deformable electronic device.
FIG. 17 is a block diagram of an electronic device in a network environment according to various embodiments.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "first", "second", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like, for example. The module may be an integrally configured component or a minimum unit or part thereof that performs one or more functions. For example, a module may be configured with an application-specific integrated circuit (ASIC).

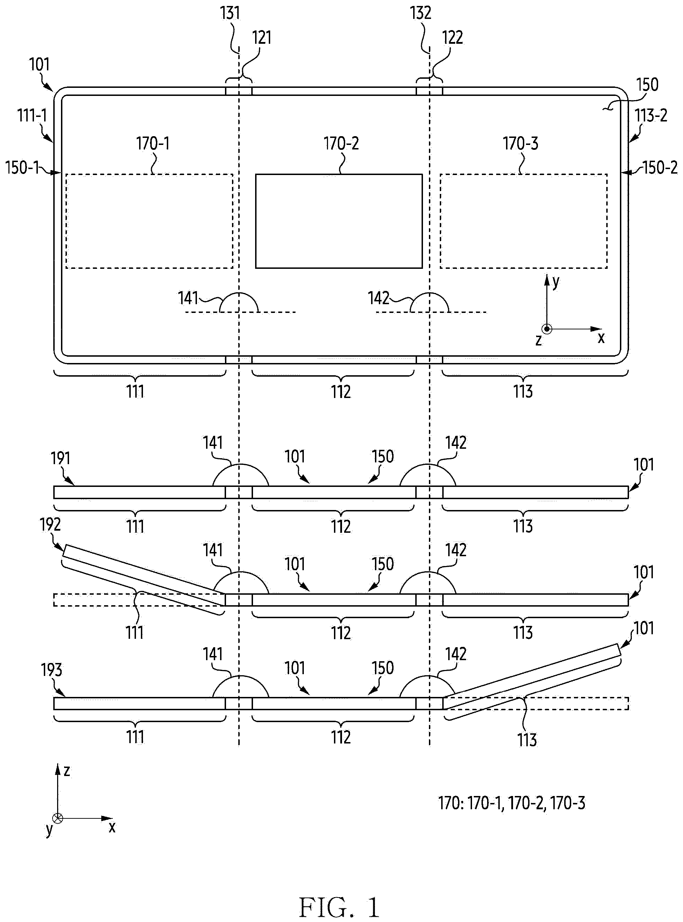

FIG. 1 illustrates an embodiment of a deformable electronic device 101. In an embodiment, in terms of being owned by a user, the electronic device 101 may be referred to as a terminal (or user terminal). The terminal may include, for example, a personal computer (PC), such as a laptop and a desktop. The terminal may include, for example, a smartphone, a smartpad, and/or a tablet PC. The terminal may include a smart accessory such as a smartwatch and/or a head-mounted device (HMD).

Referring to FIG. 1, the electronic device 101 according to an embodiment may include a deformable housing. Based on deformability, the housing of the electronic device 101 may be divided into a plurality of parts (or combinations and/or portions). For example, the housing of the electronic device 101 of FIG. 1 may include a first housing 111, a second housing 112, and a first hinge assembly 121 for rotatably coupling the first housing 111 and the second housing 112. By the first hinge assembly 121, a relative position, a posture (or position), an angle, a shape, and/or a distance of the first housing 111 and the second housing 112, which is a rigid body, may be changed by external force. The housing of the electronic device 101 may include the second housing 112, a third housing 113, a second hinge assembly 122 for rotatably coupling the second housing 112, and the third housing 113. By the second hinge assembly 122, a relative position, a posture (or position), an angle, a shape, and/or a distance of the second housing 112 and the third housing 113 may be changed by the external force. Based on the first hinge assembly 121 and the second hinge assembly 122, the electronic device 101 may have a structure that may be folded once or more. In an embodiment, a housing such as the first housing 111, the second housing 112, and the third housing 113 may be referred to as a housing assembly (or a housing combination, a housing part, and/or a housing assembly), a sub-housing, a flat housing, and/or a rigid housing. In an embodiment, a hinge assembly including the first hinge assembly 121 and the second hinge assembly 122 may be referred to as a hinge housing, a joint housing and/or a flexible housing.

Referring to FIG. 1, a first folding axis 131 may be a rotation axis of the first housing 111 and the second housing 112 connected through the first hinge assembly 121, and may be formed within the first hinge assembly 121. As the first housing 111 and/or the second housing 112 are rotated with respect to the first folding axis 131, a first angle 141 between the first housing 111, the first hinge assembly 121, and the second housing 112 may be changed. A second folding axis 132 is a rotation axis of the second housing 112 and the third housing 113 connected through the second hinge assembly 122 and may be formed within the second hinge assembly 122. As the second housing 112 and/or the third housing 113 are rotated with respect to the second folding axis 132, a second angle 142 between the second housing 112, the second hinge assembly 122, and the third housing 113 may be changed. In terms of including a plurality of deformable folding axes, such as the first folding axis 131 and the second folding axis 132, the electronic device 101 may be referred to as a multi-foldable electronic device.

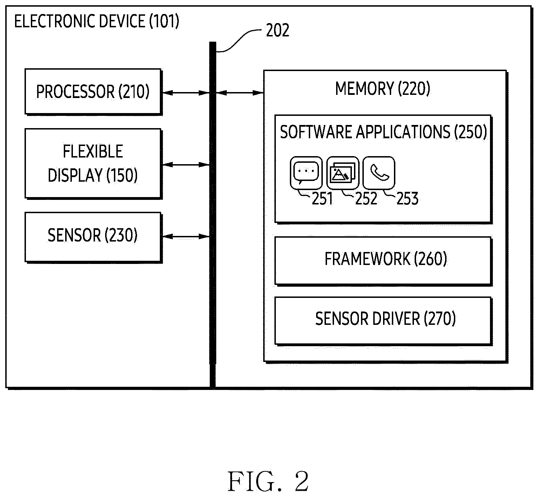

Referring to FIG. 1, according to an embodiment, the electronic device 101 may include a flexible display 150 disposed on one surface (e.g., a front surface of the electronic device 101) of the first housing 111, the second housing 112, and the third housing 113. For example, the flexible display 150 may extend from the first housing 111 to the third housing 113 crossing the second housing 112. The flexible display 150 may form at least a portion of front surfaces of the first housing 111, the second housing 112, and the third housing 113. For example, the flexible display 150 may be disposed from the first housing 111 to the third housing 113 crossing the first hinge assembly 121, the second housing 112, and the second hinge assembly 122. Hereinafter, the first angle 141 may correspond to an angle between one surface of the first housing 111 on which the flexible display 150 is disposed and one surface of the second housing 112 that may be folded by the first folding axis 131 of the first hinge assembly 121. Hereinafter, the second angle 142 may correspond to an angle between one surface of the second housing 112 on which the flexible display 150 is disposed and one surface of the third housing 113 that may be folded by the second folding axis 132 of the second hinge assembly 122. In an embodiment, the flexible display 150 may be referred to as a display, a deformable display, and/or a deformable panel. An exemplary structure of the electronic device 101 for controlling the flexible display 150 will be described with reference to FIG. 2.

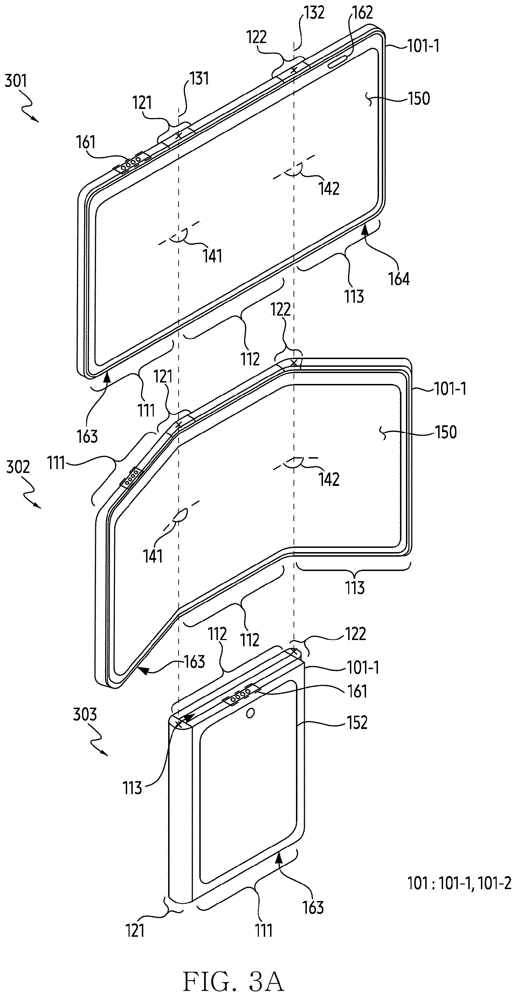

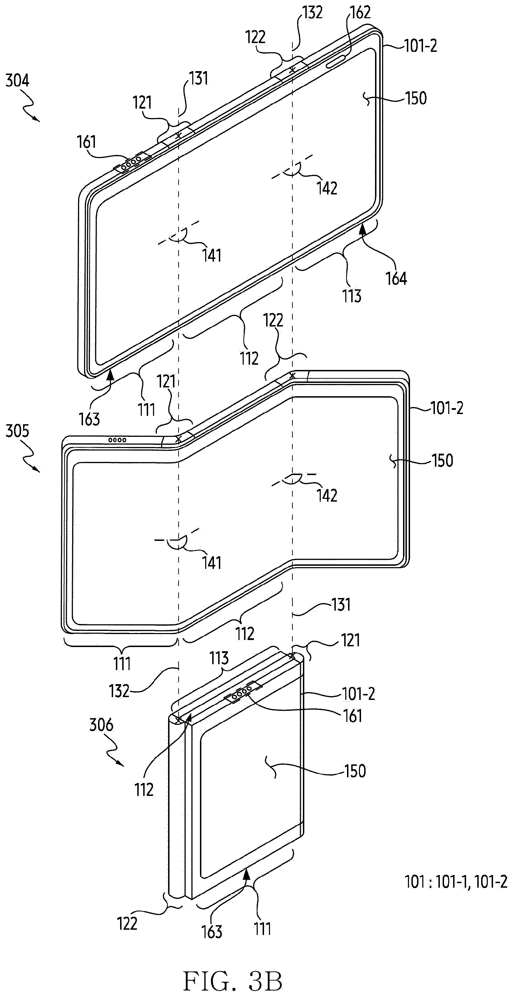

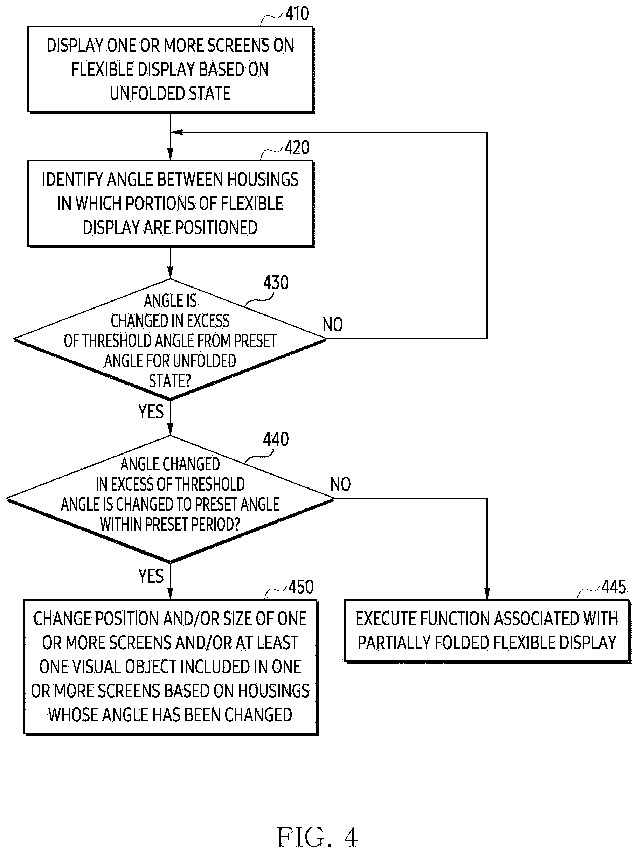

Referring to FIG. 1, the posture and/or the shape of the electronic device 101 and/or the flexible display 150 may be divided by the first angle 141 and/or the second angle 142. A state of the electronic device 101 divided by the first angle 141 and/or the second angle 142 will be described with reference to FIGS. 3A and 3B. According to an embodiment, the electronic device 101 may change a position and/or size of a visual object 170 displayed on the flexible display 150 based on rotation of the first folding axis 131 and/or the second folding axis 132. An operation performed by the electronic device 101 based on the rotation of the first folding axis 131 and/or the second folding axis 132 will be described with reference to FIGS. 4 to 15.

Referring to FIG. 1, an appearance of the front surface of the electronic device 101 viewed from a z-axis and a side surface of the electronic device 101 viewed from a y-axis are illustrated. In a state 191 in which the first angle 141 and the second angle 142 are substantially straight angles (about 180 °), the electronic device 101 may display a visual object 170-2 positioned at center of an active area of the flexible display 150. Center of the visual object 170-2 may coincide with the center of the active area of the flexible display 150.

Referring to FIG. 1, the electronic device 101 may identify an input indicating a change in a position of the visual object 170-2 based on physical rotation of the first folding axis 131 and/or the second folding axis 132. For example, the electronic device 101 may identify rotation of the first housing 111 with respect to the second housing 112 from the state 191, such as state 192. Based on the rotation, the first angle 141 between the first housing 111 and the second housing 112 may be changed to the flat angle after being increased in excess of a preset threshold angle (e.g., about 30°) from a flat angle of the state 191. For example, the user of the electronic device 101 may change a position and/or a posture of the first housing 111 with respect to the second housing 112 from a position in the state 191 to a position in the state 192, and then restore it to the state 191. Based on the above-described change in the first angle 141, the electronic device 101 may display the visual object 170-2 at a position corresponding to the visual object 170-2 displayed before identifying the change and adjacent to an edge 150-1 of the flexible display 150 corresponding to an edge 111-1 of the first housing 111 associated with the first angle 141, on the flexible display 150.

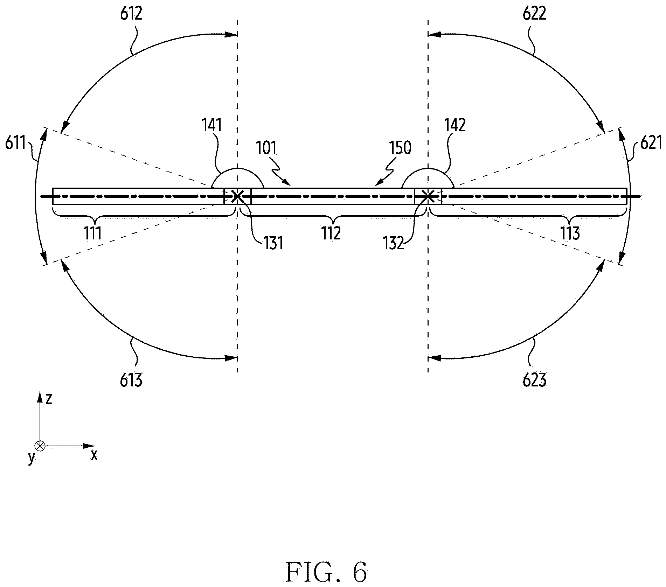

For example, the electronic device 101 may identify rotation of the third housing 113 with respect to the second housing 112 from the state 191, such as a state 193. Based on the rotation, after the second angle 142 is changed in excess of the preset threshold angle from the flat angle of the state 191, it may be changed back to the flat angle. Based on the above-described a change in the second angle 142, the electronic device 101 may display a visual object 170-3 at a position corresponding to the visual object 170-2 displayed before identifying the change and adjacent to an edge 150-2 of the flexible display 150 corresponding to an edge 113-2 of the third housing 113 associated with the second angle 142, on the flexible display 150. An operation of the electronic device 101 identifying the rotation of the first housing 111 or the third housing 113 with respect to the second housing 112 will be described with reference to FIG. 6.

According to an embodiment, the electronic device 101 may identify a gesture for shuttling the flexible display 150 based on the first folding axis 131 and/or the second folding axis 132 between sub-folded states such as the states 192 and 193 from an unfolded state such as the state 191. In response to the gesture, the electronic device 101 may change the position and/or the size of the visual object 170 displayed on the flexible display 150. As described above with reference to FIG. 1, based on the gesture, the electronic device 101 may move the visual object 170 displayed on the flexible display 150 to one edge (e.g., the edges 150-1 and 150-2) of the flexible display 150 adjacent to the first folding axis 131 and/or the second folding axis 132 rotated by the gesture. Based on the movement of the visual object 170, the electronic device 101 may move the visual object 170 to a position adjacent to a body part (e.g., a user's hand holding the electronic device 101) that has performed the gesture. Based on the movement of the visual object 170, the electronic device 101 may promote an interaction (e.g., a touch input to the visual object 170) between the body part and the visual object 170.

FIG. 2 illustrates an example of a block diagram of an electronic device 101 according to an embodiment. The electronic device 101 of FIG. 1 may include hardware of the electronic device 101 described with reference to FIG. 2. Referring to FIG. 2, according to an embodiment, the electronic device 101 may include at least one of a processor 210, a memory 220, a flexible display 150, and a sensor 230. The processor 210, the memory 220, the flexible display 150, and the sensor 230 may be electronically and/or operably coupled with each other by an electronic component such as a communication bus 202.

In an embodiment, that hardware components of the electronic device 101 are operably coupled may mean that a direct connection or an indirect connection between hardware components is established wired or wirelessly so that a second hardware component is controlled by a first hardware component among the hardware components. Although illustrated based on different blocks, the embodiment is not limited thereto, and some (e.g., at least some of the processor 210 and the memory 220) of the hardware of FIG. 2 may be included in a single integrated circuit such as a system on a chip (SoC). The hardware components of the electronic device 101 divided into blocks may be located or included in at least one of a first housing 111, a second housing 112, or a third housing 113 described with reference to FIG. 1. A type and/or the number of the hardware components included in the electronic device 101 are not limited to those illustrated in FIG. 2. For example, the electronic device 101 may include only some of the hardware components illustrated based on the blocks of FIG. 2.

According to an embodiment, the processor 210 of the electronic device 101 may include hardware and/or a circuit for processing data based on one or more instructions. The hardware and/or the circuit for processing the data may include, for example, an arithmetic and logic unit (ALU), a floating point unit (FPU), a field programmable gate array (FPGA), a central processing unit (CPU), and/or an application processor (AP). The number of the processors 210 may be one or more. For example, the processor 210 may have a structure of a multi-core processor such as a dual core, a quad core, or a hexa core.

According to an embodiment, the memory 220 of the electronic device 101 may include a hardware component for storing data and/or an instruction inputted and/or outputted to the processor 210. The memory 220 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, a solid state drive (SSD), and an embedded multi-media card (eMMC).

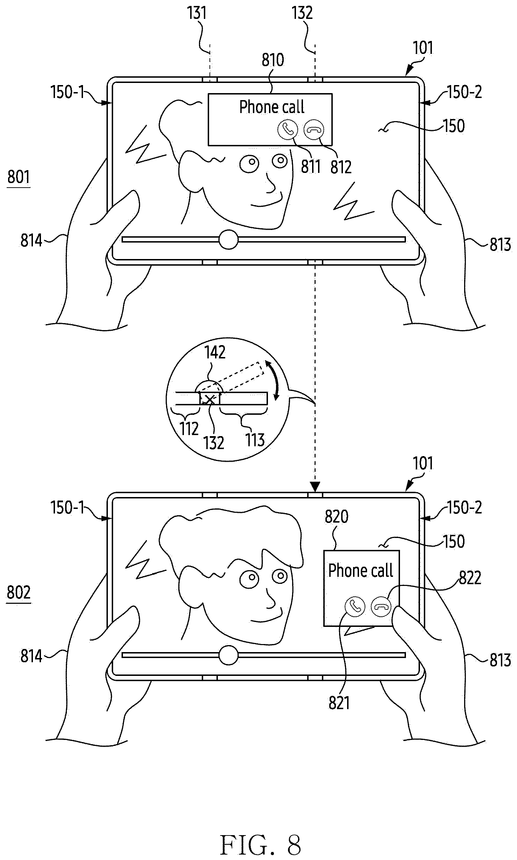

According to an embodiment, the flexible display 150 of the electronic device 101 may output visualized information (e.g., screens of FIGS. 8, 9 and/or 11) to a user. For example, the flexible display 150 may output visualized information to the user, by being controlled by a controller such as a graphic processing unit (GPU) and/or the processor 210. The flexible display 150 may include a liquid crystal display (LCD), a plasma display panel (PDP), and/or one or more light emitting diodes (LEDs). The LED may include an organic LED (OLED). The flexible display 150 may include electronic paper. As described above with reference to FIG. 1, the flexible display 150 may have at least a partially bent shape or/or a deformable shape. Hereinafter, the active area and/or the display area of the flexible display 150 may correspond to at least a portion of the flexible display 150 including one or more enabled (or activated) pixels.

According to an embodiment, the flexible display 150 of the electronic device 101 may include a sensor (e.g., a touch sensor panel (TSP) for detecting an external object (e.g., a user's finger) on the flexible display 150. For example, based on the TSP, the electronic device 101 may detect an external object floating on the flexible display 150 or in contact with the flexible display 150. In response to detecting the external object, the electronic device 101 may execute a function associated with a specific visual object corresponding to a position of the external object on the flexible display 150 among visual objects that is being displayed on the flexible display 150.

According to an embodiment, the sensor 230 of the electronic device 101 may generate electronic information that may be processed by the processor 210 or stored in the memory 220 from non-electronic information associated with the electronic device 101. For example, the sensor 230 may include a global positioning system (GPS) sensor for detecting a geographic location of the electronic device 101. In addition to the GPS method, the sensor 230 may generate information indicating the geographic location of the electronic device 101 based on a global navigation satellite system (GNSS), for example, such as galileo, beidou, and compass. The information may be stored in the memory 220, or may be processed by the processor 210, and/or may be transmitted to another electronic device distinct from the electronic device 101 through a communication circuit 240. The sensor 230 is not limited to the above, and may include an image sensor, an illuminance sensor, a proximity sensor, a grip sensor, and/or a ToF sensor for detecting electromagnetic waves including light.

In an embodiment, the processor 210 of the electronic device 101 may identify a posture, a shape, and/or a direction of the electronic device 101 by using the sensor 230. The sensor 230 may include a hall sensor and/or an inertial measurement unit (IMU) for identifying the posture, the shape, and/or the direction of the electronic device 101. The hall sensor may include a magnet and a magnetic field sensor that measures a change in a magnetic field formed by the magnet. The magnet and the magnetic field sensor may be disposed at different parts (or portions) of the housing of the electronic device 101. Based on the change in the magnetic field measured by the magnetic field sensor, the hall sensor may output sensor data indicating a distance between the portions.

For example, in an embodiment in which the electronic device 101 includes a deformable housing, the processor 210 of the electronic device 101 may identify the shape of the housing or may identify a parameter (e.g., a first angle 141 and/or a second angle 142 of FIG. 1) associated with the shape by using the hall sensor including the magnet and the magnetic field sensor disposed at different parts (e.g., the first housing 111, the second housing 112 and/or the third housing 113 of FIG. 1) of the housing. For example, the hall sensor may output sensor data indicating the distance and/or the shape of the housing.

According to an embodiment, the IMU may include an acceleration sensor, a gyro sensor, a geomagnetic sensor, or any combination thereof. The acceleration sensor may output an electrical signal indicating gravitational acceleration and/or acceleration of each of a plurality of axes (e.g., a x-axis, a y-axis, and a z-axis) perpendicular to each other. The gyro sensor may output an electrical signal indicating an angular velocity (e.g., an angular velocity based on a roll, a pitch, and/or a yaw) of each of the plurality of axes. The geomagnetic sensor may output an electrical signal indicating magnitude of the magnetic field formed in the electronic device 101 along each of the plurality of axes (e.g., the x-axis, the y-axis, and/or the z-axis). The processor 210 may repeatedly obtain data indicating the acceleration, the angular velocity, and/or the magnitude of the magnetic field from the IMU based on a preset period (e.g., 1 millisecond). By using the hall sensor and/or the IMU, the processor 210 may identify parameters (e.g., the first angle 141 and/or the second angle 142 of FIG. 1) associated with the shape of the electronic device 101. Based on the parameters, the processor 210 may identify a current shape of the electronic device 101 from among preset shapes (e.g., an unfolded state, a folded state, and/or a sub-folded state) for distinguishing the shape of the electronic device 101. For example, the processor 210 of the electronic device 101 may identify the first angle 141 between the first housing 111 and the second housing 112 and/or the second angle 142 between the second housing 112 and the third housing 113 of FIG. 1 by using the sensor 230.

Although not illustrated, according to an embodiment, the electronic device 101 may include an output means for outputting information in a form other than a visualized form. For example, the electronic device 101 may include a motor for providing haptic feedback based on vibration. For example, the electronic device 101 may include one or more speakers (e.g., a first speaker 161, a second speaker 162, a third speaker 163, and a fourth speaker 164 of FIGS. 3A and 3B) for outputting an audio signal.

According to an embodiment, in the memory 220 of the electronic device 101, one or more instructions (or commands) indicating a calculation and/or an operation to be performed by the processor 210 on data may be stored. A set of one or more instructions may be referred to as firmware, operating system, process, routine, sub-routine and/or application. For example, the electronic device 101 and/or the processor 210 may perform at least one of operations of FIG. 4, FIG. 5, and/or FIG. 15 when sets of a plurality of instructions distributed in a form of an operating system, firmware, driver, and/or application are executed. Hereinafter, that the application is installed in the electronic device 101 may mean that the one or more instructions provided in the form of the application are stored in the memory 220 of the electronic device 101, and the one or more applications are stored in an executable format (e.g., a file with an extension preset by the operating system of the electronic device 101) by the processor 210 of the electronic device 101.

Referring to FIG. 2, programs stored in the memory 220 are illustrated as different blocks. The programs stored in the memory 220 may be divided into software applications 250 (or application software), framework 260, and/or sensor driver 270 based on a target. The sensor driver 270 may include a program that is executed for driving one or more sensors (e.g., the sensor 230) included in the electronic device 101. The framework 260 may include a program (e.g., an operating system including system software and/or a kernel), a library, and/or an application programming interface (API) for supporting control of the electronic device 101 based on the software applications 250. The software applications 250 may be installed in the electronic device 101 in order to execute one or more functions designed to target the user of the electronic device 101.

Referring to FIG. 2, the software applications 250 installed in the electronic device 101 are exemplarily illustrated. For example, a messenger application 251 for exchanging a text message (or media content such as images, videos, and sounds) between users, such as SMS, may be installed on the electronic device 101. For example, a gallery application 252 for browsing one or more media contents (e.g., an image and/or a video such as a photo) stored in the memory 220 of the electronic device 101 may be installed on the electronic device 101. For example, a call application 253 for call connection (e.g., voice over internet protocol (VoIP), voice over long term evolution (VoLTE), voice over new radio (VoNR), and/or voice over fifth generation (Vo5G)) may be installed on the electronic device 101.

In an embodiment, the processor 210 of the electronic device 101 may obtain a screen to be displayed on the flexible display 150 based on execution of at least one of the software applications 250. When a plurality of software applications 250 are executed based on multitasking, the plurality of software applications 250 executed by the processor 210 may be divided into a foreground application corresponding to the screen displayed on the flexible display 150 and a background application different from the foreground application. For example, the background application may be a software application that is executed by the processor 210 but does not generate or provide the screen to be displayed on the flexible display 150.

According to an embodiment, the processor 210 of the electronic device 101 may identify a motion of temporarily bending the flexible display 150. By the motion, the angle (e.g., the first angle 141 and/or the second angle 142 of FIG. 1) between the housings (e.g., the first housing 111, the second housing 112 and/or the third housing 113 of FIG. 1) of the electronic device 101 may be changed from a preset angle of about 180° to another angle exceeding a threshold angle, and then changed again to the preset angle. The motion may include a first gesture rotating at least one of the housings such that a difference between an angle between the housings and the preset angle is changed in excess of a threshold angle. The motion may include a second gesture rotating at least one of the housings such that the angle between the housings is changed to the preset angle, after the first gesture. The first gesture and the second gesture may be performed with a time difference less than a preset time difference (e.g., about 1.5 seconds and/or about 3 seconds). The electronic device 101 that identified the motion may change a position and/or size of a visual object (e.g., a visual object 170 of FIG. 1) for receiving a touch input on the flexible display 150. For example, the electronic device 101 may move the visual object toward an edge positioned on two housings rotated by the motion, among edges of the flexible display 150.

Hereinafter, an appearance of the electronic device 101 changed by the motion and/or an operation of the electronic device 101 for identifying the motion will be described with reference to FIGS. 3A, 3B, 4 and/or 5.

FIGS. 3A and 3B illustrate an embodiment of a deformable electronic device 101. The electronic device 101 of FIGS. 1 and/or 2 may include the electronic device 101 of FIGS. 3A and 3B.

Referring to FIGS. 3A and 3B, according to an embodiment, the electronic device 101 may include a first speaker 161 and/or a third speaker 163 disposed in a first housing 111. The electronic device 101 may include a second speaker 162 and/or a fourth speaker 164 disposed in a third housing 113. The third speaker 163 may be disposed at a second edge of the first housing 111 opposite to a first edge of the first housing 111 on which the first speaker 161 is disposed. The fourth speaker 164 may be disposed at the second edge of the third housing 113 opposite to the first edge of the third housing 113 on which the second speaker 162 is disposed. Although the second speaker 162 disposed on one surface of the third housing 113 on which a flexible display 150 is disposed and the first speaker 161, the third speaker 163, and the fourth speaker 164 disposed on a side surface connected to a front surface of the electronic device 101 are exemplarily illustrated, positions of speakers (e.g., the first speaker 161 to the fourth speaker 164) included in the electronic device 101 are not limited to positions illustrated in FIG. 3A and/or 3B.

Referring to FIGS. 3A to 3B, different forms of the electronic device 101 supporting deformability based on a plurality of folding axes (e.g., a first folding axis 131 and/or a second folding axis 132) are illustrated. Referring to FIG. 3A, a first electronic device 101-1 including the flexible display 150 visually completely covered by the first housing 111 to the third housing 113 folded along the first folding axis 131 and the second folding axis 132 is illustrated. Referring to FIG. 3A, different states (e.g., a first state 301, a second state 302 and/or a third state 303) of the first electronic device 101-1 divided by a first angle 141 and a second angle 142 are illustrated. The first state 301 of the first electronic device 101-1 in which the first angle 141 and the second angle 142 are substantially straight angles (e.g., about 180 °), may be referred to as a fully unfolded state, an opened state, an unfolded state, a flat state, an outspread state, and/or a planar state.

Referring to FIGS. 3A to 3B, in the first state 301, the flexible display 150 disposed from the first housing 111 to the third housing 113 crossing the second housing 112 may have a substantially flat shape. In the first state 301, a single plane may be formed on an entire surface of the electronic device 101 on which the flexible display 150 is disposed. In the first state 301, directions of front surfaces of the first housing 111, the second housing 112, and the third housing 113 may be parallel to each other and/or the same. A state 191 of FIG. 1 may correspond to or be included in the first state 301 and/or the unfolded state of FIG. 3A.

Referring to FIG. 3A, the second state 302 of the first electronic device 101-1 in which the first angle 141 is substantially a flat angle and the second angle 142 is an angle less than the flat angle is illustrated. A state of the first electronic device 101-1 having the first angle 141 and/or the second angle 142 less than the flat angle, including the second state 302, may be referred to as an in-folded state, a sub-unfolded state (or a sub-folded state), an intermediate state, and/or a concave state. Although only a second hinge assembly 122 among a first hinge assembly 121 and the second hinge assembly 122 is illustrated to be folded, the embodiment is not limited thereto, and the sub-folded state may include a state in which both the first angle 141 and the second angle 142 are less than the flat angle and exceed 0°. In the sub-folded state, a plurality of planes may be formed by the flexible display 150 folded by at least one hinge assembly. Referring to the second state 302, the flexible display 150 bent by the second hinge assembly 122 may include two flat portions divided by the second hinge assembly 122. For example, the flat portions of the flexible display 150 divided by the second hinge assembly 122 may face different directions that are not parallel. The states 192 and 193 of FIG. 1 may correspond to or be included in the second state 302 and/or the in-folded state of FIG. 3A.

Referring to FIG. 3A, the third state 303 of the first electronic device 101-1 in which both the first angle 141 and the second angle 142 are substantially 0° may be referred to as a fully folded state, a folded state, and/or a closed state. In the third state 303, the flexible display 150 may be visually completely covered by the first housing 1 1 1 to the third housing 113. For example, in the folded state, size at which the flexible display 150 of the first electronic device 101-1 is exposed to the outside may be substantially 0. Referring to FIG. 3A, the exemplary third state 303 in which each of the front surface and the rear surface of the third housing 113 in which a portion of the flexible display 150 is disposed is covered by the first housing 111 and the second housing 112 is illustrated, but the embodiment is not limited thereto. The first electronic device 101-1 including the flexible display 150 visually completely covered in the folded state may include a cover display 152 disposed on the rear surface opposite to the front surface on which the flexible display 150 is disposed. Referring to FIG. 3A, according to an embodiment, the first electronic device 101-1 may include the cover display 152 disposed on a second surface (e.g., the rear surface of the first housing 111) of the first housing 111 opposite to a first surface (e.g., the front surface of the first housing 111) of the first housing 111 in which the portion of the flexible display 150 is disposed.

Referring to FIG. 3A, the first electronic device 101-1 including the flexible display 150 configured to be folded at an angle less than or equal to the flat angle along the first folding axis 131 and the second folding axis 132 may be referred to as a G-shaped foldable electronic device. Referring to FIG. 3B, different shapes of a second electronic device 101-2 including the flexible display 150 configured to be folded at an angle exceeding the flat angle along at least one of the first folding axis 131 or the second folding axis 132 are illustrated. The second electronic device 101-2 may be referred to as an S (or Z)-shaped foldable electronic device.

Referring to FIG. 3B, different states (e.g., a fourth state 304 to a sixth state 306) of the second electronic device 101-2 divided by the first angle 141 and the second angle 142 are illustrated. The fourth state 304 of the second electronic device 101-2 may correspond to the first state 301 of the first electronic device 101-1 of FIG. 3A. In the fourth state 304 corresponding to the unfolded state, a flat plane may be formed by the flexible display 150.

Referring to FIG. 3B, a fifth state 305 of the second electronic device 101-2 in which the first angle 141 exceeds the flat angle and the second angle 142 is substantially the flat angle is illustrated. A state of the second electronic device 101-2 in which the first angle 141 and/or the second angle 142 exceeds the flat angle and is less than 360 ° may be referred to as an out-folded state, an intermediate state, a sub-folded state, and/or a convex state. Although only the first angle 141 among the first angle 141 and the second angle 142 is illustrated to exceed the flat angle, the embodiment is not limited thereto. In the convex state including the fifth state 305, a plurality of planes formed by the flexible display 150 folded by the first hinge assembly 121 may face different directions.

Referring to FIG. 3B, the sixth state 306 of the second electronic device 101-2 in which the first angle 141 is substantially 360 ° and the second angle 142 is substantially 0 ° may be referred to as a fully folded state, a folded state, and/or a closed state. In the sixth state 306, among the portions of the flexible display 150 disposed in each of the first housing 111 to the third housing 113, only the portion of the flexible display 150 disposed on the first housing 111 may be exposed to the outside.

According to an embodiment, the electronic device 101 may identify the state (e.g., any one state among the unfolded state, the folded state, the in-folded state, and/or the out-folded state) of the electronic device 101 indicated by the first angle 141 and the second angle 142 based on a sensor (e.g., a sensor 230 of FIG. 2). Based on switching between the states described with reference to FIGS. 3A to 3B, the electronic device 101 may identify motion, input, and/or gesture for changing a position of a visual object displayed on the flexible display 150. For example, the electronic device 101 may move the visual object displayed on the flexible display 150 to an edge of the flexible display 150 on the third housing 113, in case that the third housing 113 is switched to the bent state 302 with respect to the second housing 112 and then changed to the state 301 within a preset period, from the state 301 of FIG. 3A. Based on movement of the visual object, the electronic device 101 may assist a touch input between a body part (e.g., a hand) holding the third housing 113 and the visual object.

Hereinafter, an exemplary operation of the electronic device 101 identifying a motion for changing the position of the visual object will be described with reference to FIG. 4.

FIG. 4 illustrates a flowchart of an electronic device according to an embodiment. An electronic device 101 of FIGS. 1 and 2 may perform an operation of the electronic device described with reference to FIG. 4. For example, the electronic device 101 and/or a processor 210 of FIG. 2 may perform operations of the electronic device described with reference to FIG. 4.

In the following embodiment, each operation may be performed in sequence, but is not necessarily performed in sequence. For example, an order of each operation may be changed, and at least two operations may be performed in parallel.

Referring to FIG. 4, in operation 410, according to an embodiment, a processor of the electronic device may display one or more screens on a flexible display (e.g., a flexible display 150 of FIGS. 1 and 2) based on an unfolded state. The unfolded state of the operation 410 may include a state in which the flexible display described with reference to a state 301 of FIG. 3A and/or a state 304 of FIG. 3B is substantially fully unfolded. The unfolded state may be identified based on sensor data of a sensor (e.g., a sensor 230 of FIG. 2) of the electronic device. In the unfolded state, angles (e.g., a first angle 141 and/or a second angle 142 of FIG. 1) between housings (e.g., a first housing 111, a second housing 112 and/or a third housing 113 of FIG. 1) of the electronic device may correspond to a preset angle (e.g., about 180 °) associated with the unfolded state.

In the operation 410 in the unfolded state, the processor may display one or more screens in an entire active area of the flexible display. Hereinafter, the screen may mean a user interface (UI) displayed in at least a portion of the flexible display. The screen may include, for example, a window of a window operating system and/or an activity of an android operating system. The screen may be displayed on the flexible display based on execution of a software application and/or a process (e.g., a foreground process). In case that the processor executes a plurality of foreground processes based on multitasking, the processor may display a plurality of screens provided from the plurality of foreground processes on the flexible display. The plurality of screens may be displayed on portions of the flexible display that do not overlap each other based on a picture by picture (PBP). The embodiment is not limited thereto, and a first screen among the plurality of screens may be displayed overlapping on the second screen among the plurality of screens based on a picture in picture (PIP).

In an embodiment, the screen displayed on the flexible display based on the operation 410 may include a visual object for receiving the touch input. The visual object may mean an object that is deployable in the screen for visualization and/or interaction of information, such as a pop-up-window (e.g., toast), a text, an image, an icon, a video, a button, a checkbox, a radio button, a text box, a slider, a table or any combination thereof. The visual object may be referred to as a visual element, an UI element, a view object, and/or a view element.

Referring to FIG. 4, in operation 420, according to an embodiment, the processor of the electronic device may identify an angle between housings (e.g., the first housing 111, the second housing 112, and/or the third housing 113 of FIG. 1) in which the portions of the flexible display are positioned. The processor may identify a change amount of at least one of the angles between the housings by using the sensor. Based on the operation 420, the processor may detect, or identify, and/or monitor rotation of at least one of folding axes (e.g., a first folding axis 131 and/or a second folding axis 132 of FIG. 1) between the housings.

Referring to FIG. 4, in operation 430, according to an embodiment, the processor of the electronic device may identify whether the angle detected by the operation 420 is changed in excess of a threshold angle from the preset angle for the unfolded state. For example, when a user of the electronic device rotates a second housing with respect to a first housing, the processor may identify a change in an angle between the first housing and the second housing. The processor may identify whether the angle is changed in excess of the threshold angle. The threshold angle of the operation 430 will be described with reference to FIG. 6.

In case that the angle identified based on the operation 420 is changed from the preset angle to an angle less than the threshold angle, or is not changed (430-No), the processor may maintain identifying the angle between the housings based on the operation 420. For example, the processor may maintain displaying the one or more screens based on the operation 410. For example, the processor may not change the one or more screens based on the angle between the housings.

Referring to FIG. 4, in case that the angle identified based on the operation 420 is changed in excess of the threshold angle from the preset angle (430-Yes), the processor may perform operation 440. In the operation 440, according to an embodiment, the processor of the electronic device may identify whether the angle changed in excess of the threshold angle is changed to the preset angle within a preset period (or preset time). As the angle identified based on the operation 420 is changed to the preset angle of operation 440, a state of the electronic device may be switched to the unfolded state. The preset period may be set to, for example, a period of less than a few seconds. The preset period may be set heuristically to identify an input for changing the display of one or more screens displayed on the flexible display in the unfolded state, which will be described with reference to operation 450. In case that the angle changed in excess of the threshold angle of the operation 430 is changed to the preset angle within the preset period (440-Yes), the processor may perform the operation 450. For example, the processor that identified that the state of the electronic device is switched (or is being switched) to the unfolded state may perform the operation 450. In case that the angle changed in excess of the threshold angle of the operation 430 is not changed to the preset angle within the preset period (440-No), the processor may perform operation 445.

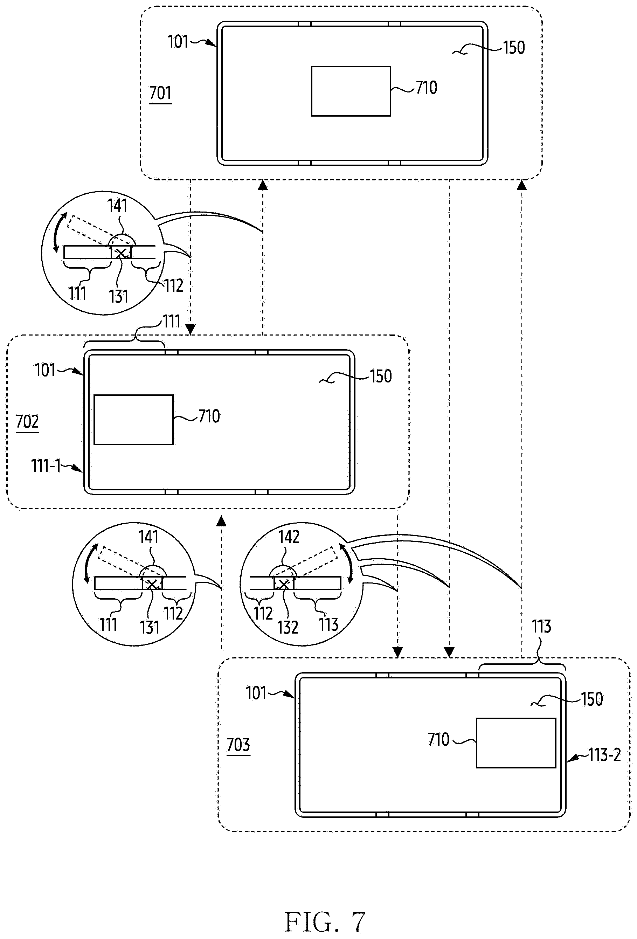

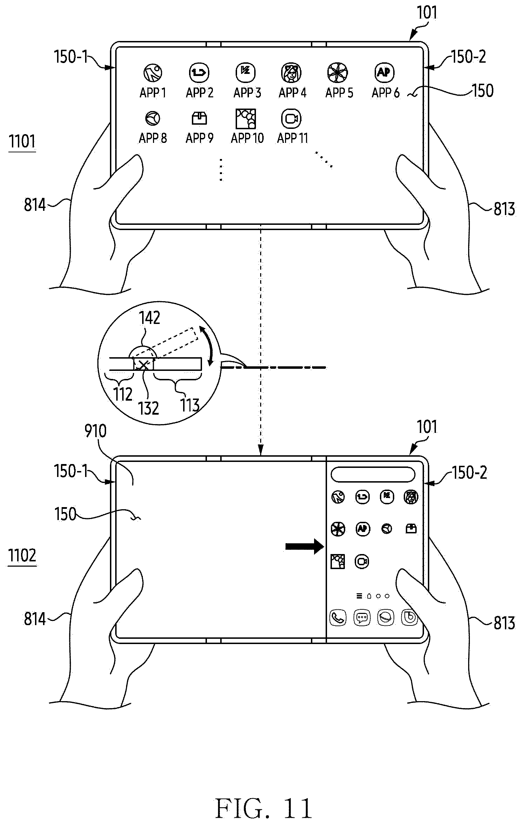

Referring to FIG. 4, in the operation 450, according to an embodiment, the processor of the electronic device may change a position and/or a size of one or more screens and/or at least one visual object included in the one or more screens based on the housings whose angle was changed. As described above with reference to FIG. 1, the processor may move the position of the visual object for receiving the touch input to a position adjacent to an edge of the flexible display based on the operation 450. An operation of the processor changing the position and/or size of the visual object based on the operation 450 will be described with reference to FIGS. 7 to 10, 14A, 14B and/or 16. The operation of the processor changing the position and/or size of one or more screens based on the operation 450 will be described with reference to FIGS. 11 to 13.

Referring to FIG. 4, in the operation 445, according to an embodiment, the processor of the electronic device may execute a function associated with a partially folded flexible display. In case that the changed angle between the housings maintains different angle from the preset angle for the unfolded state for a period exceeding the preset period, the processor may switch from the unfolded state to a sub-folded state (e.g., a state 302 of FIG. 3A and/or a state 305 of FIG. 3B) and/or a folded state. Based on the switched sub-folded state and/or folded state, the processor may change one or more screens that was displayed on the flexible display based on the operation 410. For example, the processor that displayed the plurality of screens based on the operation 410 may allocate the plurality of screens to each of flat portions of the flexible display within the sub-folded state switched based on the operation 445.

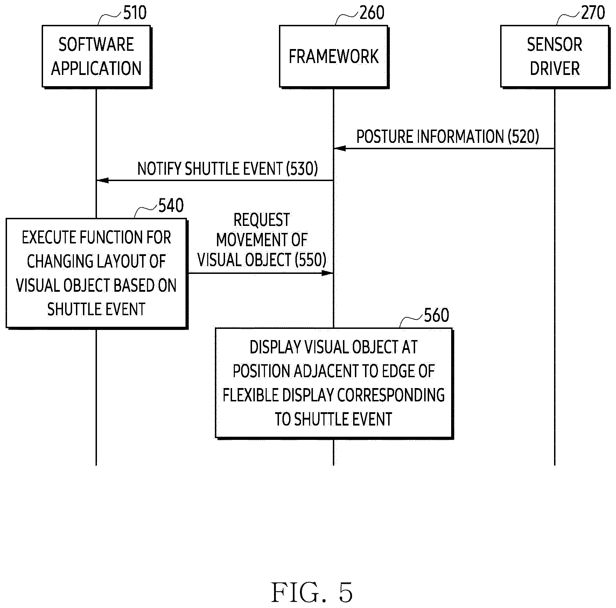

Hereinafter, one or more programs executed by the processor to execute the operations of FIG. 4 will be exemplarily described with reference to FIG. 5.

FIG. 5 illustrates an exemplary flowchart for describing an operation of an electronic device, according to an embodiment, based on a program. An electronic device 101 of FIG. 1 and/or FIG. 2 may perform an operation described with reference to FIG. 5. For example, the electronic device 101 and/or a processor 210 of FIG. 2 may perform the operation described with reference to FIG. 5. Referring to FIG. 5, an operation of the electronic device 101 divided based on a process (e.g., thread and/or instance) that is a unit of work executed by a processor of the electronic device will be described. For example, a software application 510, a framework 260, and a sensor driver 270 illustrated in different blocks may correspond to each of the processes executed by the processor. Based on multitasking (or multithreading), the processor of the electronic device may execute instructions of each of the processes of FIG. 5 substantially simultaneously.

Referring to FIG. 5, in operation 520, according to an embodiment, the processor of the electronic device may obtain posture information indicating a posture of the electronic device, by controlling the sensor driver 270 based on execution of the framework 260. The posture information may include sensor data of a sensor (e.g., a sensor 230 of FIG. 2) of the electronic device including an IMU and/or a hall sensor. Based on the posture information, the processor may identify a current state and/or a current shape of the electronic device among preset states (e.g., an unfolded state, a sub-folded state, and/or a folded state). The preset states may be divided by an angle (e.g., a first angle 141 and/or a second angle 142 of FIGS. 1, 3A and 3B) between housings, as described above with reference to FIGS. 3A and 3B.

In an embodiment, that the processor obtains the posture information based on the operation 520 may be performed while displaying a screen on a flexible display (e.g., a flexible display 150 of FIGS. 1, 3A and/or 3B) based on execution of the software application 510. For example, the processor may display a visual object (e.g., a visual object 170 of FIG. 1) for receiving a touch input on the flexible display while the angles between the housings correspond to a preset angle associated with the unfolded state. The software application 510 of FIG. 5 may correspond to any one of software applications 250 of FIG. 2.

Referring to FIG. 5, the processor of the electronic device may identify occurrence of a shuttle event based on the posture information of the operation 520. The processor that identified the occurrence of the shuttle event may notify the software application 510 of the occurrence of the shuttle event based on the execution of the framework 260. The shuttle event of operation 530 may be identified by an input indicating movement of the screen and/or the visual object displayed on the flexible display based on rotation of the housings. For example, the processor may identify the input, in case that the angle between the housings is changed from the preset angle in the unfolded state to an angle different from the preset angle within a period less than a preset period. The input may include a first gesture that rotates the housings such that the difference between the angles between the housings identified by the posture information and the preset angle is changed in excess of the threshold angle, and a second gesture that is performed with a time difference less than a preset time difference for the first gesture, and rotates the housings such that the angle between the housings is changed to the preset angle.

In an embodiment, that the processor notifies the software application 510 of the shuttle event may include executing a sub-routine (e.g., event listener) indicated by instructions included in the software application 510. For example, the processor may execute the sub-routine based on an identifier (or a preset constant) corresponding to the shuttle event. The sub-routine executed by the processor may be executed by a process corresponding to the software application 510, as in operation 540 of FIG. 5. The sub-routine may be pre-registered in the framework 260 based on an application programming interface (API) provided by the framework 260 to process the shuttle event and/or another even identified by the framework 260.

Referring to the operation 540 of FIG. 5, the processor of the electronic device may execute a function for changing a layout of the visual object in response to the shuttle event based on the execution of the software application 510. The operation 540 may be performed based on the execution of the sub-routine (or one or more instructions included in the sub-routine) corresponding to the shuttle event. While performing the operation 540, the processor may execute an API provided by the framework 260 and for requesting movement of the visual object (e.g., operation 550 of FIG. 5). Based on the execution of the API, the processor may identify at least one visual object to be moved based on the shuttle event within the screen displayed based on the software application 510.

In operation 560 of FIG. 5, the processor may display the visual object at a position adj acent to an edge of the flexible display corresponding to the shuttle event based on the execution of the framework 260. The visual object of the operation 560 may be identified by the request of the operation 550. Based on the operation 560, the processor may display the visual object at a position adjacent to any one side among four sides of the flexible display having a shape of a round-shaped rectangle.

Hereinafter, a posture, an angle, and/or a shape of the electronic device causing the occurrence of the shuttle event of FIG. 5 will be exemplarily described with reference to FIG. 6.

FIG. 6 illustrates an example of an operation of an electronic device 101 for obtaining information associated with an angle between housings. The electronic device 101 of FIG. 1 and/or FIG. 2 may include the electronic device 101 of FIG. 6. The operation of the electronic device 101 described with reference to FIG. 6 may be associated with operations 420, 430, and 440 of FIG. 4 and/or operations 520 and 530 of FIG. 5.

Referring to FIG. 6, an exemplary appearance of the electronic device 101 in an unfolded state as viewed from a y-axis is illustrated. The electronic device 101 may identify a first angle 141 between a first housing 111 and a second housing 112 by using one or more sensors (e.g., a sensor 230 of FIG. 2). The electronic device 101 may identify a second angle 142 between the second housing 112 and a third housing 113 by using the one or more sensors. While both the first angle 141 and the second angle 142 maintain a preset angle (about 180 °) corresponding to the unfolded state, a state of the electronic device 101 may maintain the unfolded state.

In the unfolded state, the electronic device 101 may monitor changes in the state and/or shape of the electronic device 101 based on the first angle 141 and/or the second angle 142. For example, a user of the electronic device 101 may rotate the first housing 111 with respect to the second housing 112, and/or may rotate the third housing 113 with respect to the second housing 112. In case that the user rotates the first housing 111 with respect to the second housing 112, the electronic device 101 may identify a change in the first angle 141 by using the sensor. Referring to FIG. 6, an angle range 611 may be formed based on the preset angle corresponding to the unfolded state. For example, the angle range 611 may be formed in a range of ± 30 ° (e.g., 150 ° to 210 °) based on 180 °. The electronic device 101 may identify that the first angle 141 is changed in excess of the angle range 611. For example, the electronic device 101 may identify the first angle 141 that is changed in excess of 30 ° from 180 ° based on the angle range 611. For example, a threshold angle of operation 430 of FIG. 4 may be set to distinguish whether the first angle 141 exceeds the angle range 611.

In the unfolded state, as the first housing 111 rotates with respect to the second housing 112, the first angle 141 may be included in any one of angle ranges 612 and 613 different from the angle range 611. The angle range 612 may be formed between 90 ° and 150 °. The angle range 613 may be formed between 210 ° and 270 °. In case that the first angle 141 is included in any one of the angle ranges 612 and 613 and then changed back to 180 ° within a preset period (e.g., about 1.5 seconds) or to an angle within the angle range 611, the processor may identify occurrence of a shuttle event of FIG. 5. The electronic device 101 that identified the occurrence of the shuttle event based on the change in the first angle 141 may change a position of a visual object displayed on the flexible display 150 based on an edge of the first housing 111 and/or the first housing 111 associated with the first angle 141. For example, while switching to the unfolded state based on the change in the first angle 141 or in case that identifying that the switch to the unfolded state is completed based on the change in the first angle 141, the electronic device 101 may change the position of the visual object displayed on the flexible display 150.

Similar to the above-described operation based on the first angle 141, the electronic device 101 may identify a change in the second angle 142. For example, in case that the user rotates the third housing 113 with respect to the second housing 112, the electronic device 101 may identify a change in the second angle 142 by using a sensor. Referring to FIG. 6, an angle range compared to the second angle 142 may include at least one of an angle range 621 formed based on the preset angle corresponding to the unfolded state and angle ranges 622 and 623, which are different from the angle range 621. The angle range 621 may be formed in a range of 150 ° to 210 °. The angle range 622 may be formed in a range between 90 ° and 150 °. The angle range 623 may be formed in a range between 210 ° and 270 °. The electronic device 101 may identify the occurrence of the shuttle event of FIG. 5, in case that the second angle 142 substantially corresponding to the 180 ° is changed from the 180 ° to another angle included in any one of the angle ranges 622 and 623 and then changed to 180 ° within the preset period, in the unfolded state.

Hereinafter, a shuttle gesture (or a shuttle control gesture) may include a gesture and/or motion that changes the first angle 141 and/or the second angle 142 having the preset angle (about 180 °) corresponding to the unfolded state to any one angle range among the angle ranges 612, 613, 622, and 623, and then restores it to the preset angle within a period less than the preset period. For example, a shuttle gesture for a first folding axis 131 and/or the first angle 141 may include a first gesture changing the first angle 141 to an angle within any one angle range among the angle ranges 612 and 613, and a second gesture performed at a time difference less than the preset period after the first gesture and changing the first angle 141 to the preset angle. For example, a shuttle gesture for a second folding axis 132 and/or the second angle 142 may include a third gesture changing the second angle 142 to an angle within any one angle range among the angle ranges 622 and 623, and a fourth gesture performed at the time difference less than the preset period after the third gesture and changing the second angle 142 to the preset angle.

According to an embodiment, the electronic device 101 may move a visual object displayed at center of the flexible display 150 to a position adjacent to a body part that performed the shuttle gesture, based on the shuttle gesture. Based on the movement of the visual object, the electronic device 101 may assist a touch input based on the visual object. For example, as the visual object moves, a distance between the body part and the visual object may decrease. As the distance between the body part and the visual object decreases, the user may more easily perform a touch input on the visual object.

Hereinafter, an exemplary operation of the electronic device 101 that identified a shuttle gesture causing rotation of the first folding axis 131 and/or the second folding axis 132 will be described with reference to FIG. 7.

FIG. 7 exemplarily illustrates states 701, 702, and 703 of an electronic device switched based on rotation between housings (e.g., a first housing 111, a second housing 112, and a third housing 113). An electronic device 101 of FIG. 1 and/or FIG. 2 may include the electronic device 101 of FIG. 7. For example, the electronic device 101 and/or a processor 210 of FIG. 2 may perform an operation of the electronic device 101 described with reference to FIG. 7. The operation of the electronic device 101 described with reference to FIG. 7 may be associated with operations of FIG. 4 and/or FIG. 5.

Referring to FIG. 7, the different states 701, 702, and 703 of the electronic device 101 distinguished by a shuttle gesture are illustrated. As in the states 701, 702, and 703, when directions of front surfaces of the first housing 111, the second housing 112, and the third housing 113 in which a flexible display 150 is positioned are parallel to each other, the electronic device 101 may display a screen on in entire active area of the flexible display 150. For example, in the state 701, the electronic device 101 may display a visual object 710 at center of the flexible display 150. The visual object 710 may include a button, hyperlink, slider and/or scroll view for receiving a touch input.

In the state 701 of FIG. 7, according to an embodiment, the electronic device 101 may identify a shuttle gesture for a first folding axis 131 and/or a second folding axis 132. For example, based on a shuttle gesture for temporarily bending the first housing 111 with respect to the second housing 112 based on the first folding axis 131, the electronic device 101 may switch from the state 701 to the state 702. For example, based on a shuttle gesture for temporarily bending the third housing 113 with respect to the second housing 112 based on the second folding axis 132, the electronic device 101 may switch from the state 701 to the state 703. Based on the above-described shuttle gesture, the electronic device 101 may move the visual object 710 that was being displayed at the center of the flexible display 150 to an edge of the flexible display 150.

Referring to FIG. 7, the electronic device 101 that identified a shuttle gesture based on a change in a first angle 141 may switch from the state 701 to the state 702. In the state 702, the electronic device 101 may change a position of the visual object 710 to a position adjacent to an edge 111-1 of the first housing 111. While switching from the state 701 to the state 702, the electronic device 101 may play an animation such as that the visual object 710 moves from the center of the flexible display 150 to the position adjacent to the edge 111-1 of the first housing 111. For example, in the state 701 in which the visual object 710 is displayed at the center of the flexible display 150, in response to the shuttle gesture for the first folding axis 131, the electronic device 101 may cease displaying the visual object 710 at the center of the flexible display 150 and may display the visual object 710 at the position adjacent to the edge 111-1 of the first housing 111.

Referring to FIG. 7, the electronic device 101 that identified a shuttle gesture based on a change in a second angle 142 may switch from the state 701 to the state 703. In the state 703, the electronic device 101 may change the position of the visual object 710 to a position adjacent to an edge 113-2 of the third housing 113. While switching from the state 701 to the state 703, the electronic device 101 may play an animation such as that the visual object 710 moves from the center of the flexible display 150 to the position adjacent to the edge 113-2 of the third housing 113. For example, in the state 701 in which the visual object 710 is displayed at the center of the flexible display 150, in response to the shuttle gesture for the second folding axis 132, the electronic device 101 may cease displaying the visual object 710 at the center of the flexible display 150 and may display the visual object 710 at the position adjacent to the edge 113-2 of the third housing 113.

Referring to FIG. 7, a state transition diagram for the states 701, 702, and 703 of the electronic device 101 is exemplarily illustrated. In the state 702, the electronic device 101 may switch to the state 701 in response to a shuttle gesture based on rotation of the first folding axis 131. For example, in case that the shuttle gesture based on the rotation of the first folding axis 131 is identified in succession, a state of the electronic device 101 may be repeatedly switched between the states 701 and 702. For example, the electronic device 101 that re-identified the shuttle gesture after being switched from the state 701 to the state 702 based on the shuttle gesture based on the rotation of the first folding axis 131 may restore the position of the visual object 710 on the flexible display 150 by switching back to the state 701. In the state 703, the electronic device 101 may switch to the state 703 in response to the shuttle gesture based on the rotation of the second folding axis 132. For example, in case that the shuttle gesture based on the rotation of the second folding axis 132 is identified in succession, the state of the electronic device 101 may be repeatedly switched between the states 701 and 703.

Referring to FIG. 7, in the state 702, the electronic device 101 may switch to the state 703 in response to the shuttle gesture based on the rotation of the second folding axis 132. In the state 703, the electronic device 101 may switch to the state 702 in response to the shuttle gesture based on the rotation of the first folding axis 131. In response to the shuttle gesture based on the first folding axis 131 and/or the second folding axis 132, the electronic device 101 may shift the visual object 710 displayed at the center of the flexible display 150 to the position adjacent to the edge 111-1 of the first housing 111 and/or the edge 113-2 of the third housing 113.

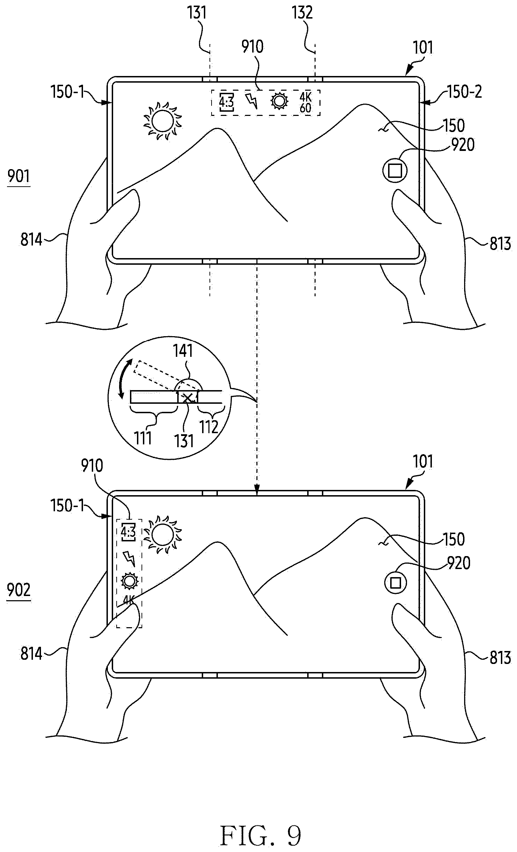

The visual object 710 of FIG. 7 may be provided by a software application (e.g., software applications 250 of FIG. 2 and/or a software application 510 of FIG. 5) executed by the electronic device 101 for receiving a touch input on the flexible display 150. The visual object 710 may include a pop-up window, a menu (e.g., a control menu) for controlling a plurality of functions, a software keyboard, and/or an app tray for execution of one or more software applications. As in the states 702 and 703, in case that the display of the visual object 710 is ceased after adjusting the position of the visual object 710 based on the shuttle gesture, the electronic device 101 may cease adjusting the position of the visual object 710 based on the shuttle gesture. Hereinafter, with reference to FIGS. 8 and 9, an example of the visual object 710 described with reference to FIG. 7 will be described.

FIG. 8 exemplarily illustrates states 801 and 802 of an electronic device 101 switched based on rotation between housings (e.g., a second housing 112 and a third housing 113). The electronic device 101 of FIG. 1 and/or FIG. 2 may include the electronic device 101 of FIG. 8. For example, the electronic device 101 and/or a processor 210 of FIG. 2 may perform an operation of the electronic device 101 described with reference to FIG. 8. The operation of the electronic device 101 described with reference to FIG. 8 may be associated with operations of FIG. 4 and/or FIG. 5.

Referring to FIG. 8, the exemplary states 801 and 802 of the electronic device 101 displaying a screen provided from a software application (e.g., a gallery application 252 of FIG. 2) for playing a video are illustrated. In the state 801 included in an unfolded state, the electronic device 101 may display the screen on an entire active area of a flexible display 150. A user viewing the flexible display 150 may hold the electronic device 101 by using a left hand 814 and a right hand 813.

In the state 801 of FIG. 8, the electronic device 101 may display a notification message. The notification message may be generated by a background application (e.g., an alarm application) executed in the electronic device 101. The notification message may be generated by a signal transmitted from an external electronic device to the electronic device 101. The signal may include a signal for call connection and/or a push message. In the state 801 displaying the screen provided from the software application, the electronic device 101 may display a visual object 810 corresponding to the notification message on the screen. The visual object 810 may have a form of a pop-up window overlapped on the screen. For example, the electronic device 101 that received a signal for the call connection may display a visual object 811 having a form of a button for call establishment and/or a visual object 812 having a form of a button for rejecting the call connection in the visual object 810.

Referring to the exemplary state 801 of FIG. 8, the electronic device 101 may display the visual object 810 at center of the flexible display 150 along a horizontal direction of the flexible display 150. For example, in the state 801, a distance between the visual object 810 and an edge 150-1 of the flexible display 150 may correspond to a distance between the visual object 810 and an edge 150-2 of the flexible display 150. Referring to FIG. 8, in the state 801, the electronic device 101 may identify a shuttle gesture associated with a second folding axis 132. For example, the user may perform the shuttle gesture by rotating a first housing 111 with respect to the second housing 112 by using the right hand 813. The electronic device 101 that identified the shuttle gesture may switch from the state 801 to a state 802 of FIG. 8.

In the state 802 of FIG. 8, the electronic device 101 may display a visual object 820 at a position adjacent to the edge 150-2 of the flexible display 150. In the state 802 displaying the visual object 820, the electronic device 101 may cease displaying the visual object 810 that was displayed in the state 801. While switching from the state 801 to the state 802, the electronic device 101 may provide a visual effect such as that the visual object 810 is moved, by displaying the visual object 820 replacing the visual object 810. Similar to the visual object 810, the visual object 820 may correspond to a signal for call connection received by the electronic device 101. For example, in the visual object 820, the electronic device 101 may display a visual object 821 for the call establishment and/or a visual object 822 for rejecting the call connection, in response to the call connection. Each of the visual objects 821 and 822 may correspond to the visual objects 811 and 812. For example, each of the visual objects 821 and 822 may be configured to execute functions of each of the visual objects 811 and 812.

According to an embodiment, the electronic device 101 may display the visual object 820 having a size and/or a layout different from that of the visual object 810 based on switching from the state 801 to the state 802. For example, the visual object 820 may have a size smaller than that of the visual object 810. A distance (or spacing) between the visual objects 821 and 822 may be less than the distance (or spacing) between the visual objects 811 and 812. The embodiment is not limited thereto.

In the state 802 after identifying the shuttle gesture based on the right hand 813, the electronic device 101 may assist a touch interaction between the right hand 813 and the visual object 820, by displaying the visual object 820 at the position adjacent to the edge 150-2 of the flexible display 150 corresponding to the right hand 813. For example, the distance between the visual object 820 and the right hand 813 displayed by the identification of the shuttle gesture may be greater than a distance between the visual object 810 and the right hand 813 displayed in the state 801 before identifying the shuttle gesture. Similarly, the electronic device 101 that identified a shuttle gesture based on the left hand 814 may assist a touch interaction based on the left hand 814, by displaying another visual object corresponding to the visual object 810 at a position adjacent to the edge 150-1 of the flexible display 150.

FIG. 9 exemplarily illustrates states 901 and 902 of an electronic device switched based on rotation between housings (e.g., a first housing 111 and a second housing 112). An electronic device 101 of FIG. 1 and/or FIG. 2 may include the electronic device 101 of FIG. 9. For example, the electronic device 101 and/or a processor 210 of FIG. 2 may perform an operation of the electronic device 101 described with reference to FIG. 9. The operation of the electronic device 101 described with reference to FIG. 9 may be associated with the operations of FIG. 4 and/or FIG. 5.

Referring to FIG. 9, the exemplary states 901 and 902 of the electronic device 101 displaying a screen provided from a software application (e.g., a camera application) associated with a camera are illustrated. In the state 901 included in the unfolded state, the electronic device 101 may display the screen provided from the camera application in an entire active area of a flexible display 150. For example, the electronic device 101 may display a preview image on the flexible display 150 based on at least a portion of an image and/or a video provided from the camera.

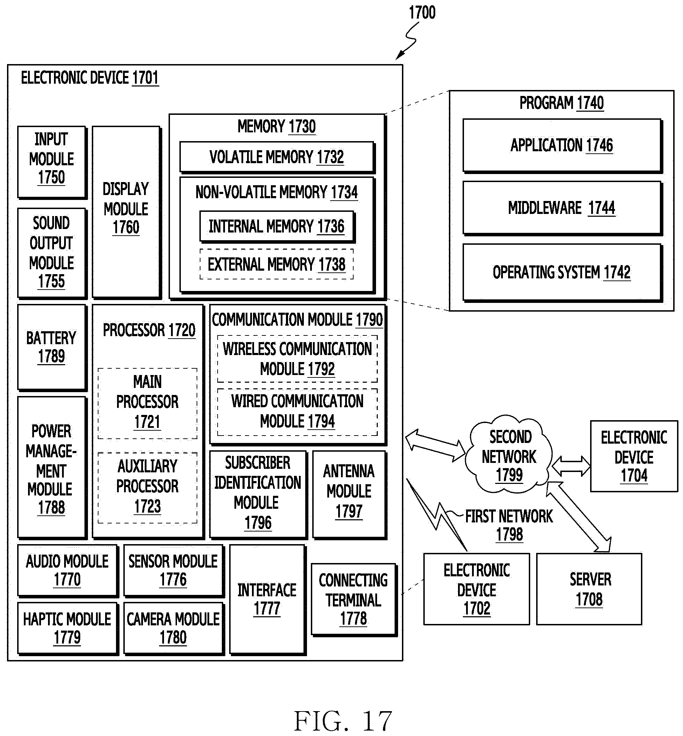

In the state 901 of FIG. 9, the electronic device 101 may display a visual object for controlling the camera (e.g., camera module 1780 of FIG. 17) by overlapping on the preview image displayed on the flexible display 150. The electronic device 101 may display a visual object (e.g., a shutter 920 having a form of a button) for receiving an input (e.g., a shooting input) for capturing the picture and/or the video, by controlling the camera. The electronic device 101 may display visual objects 910 for controlling a state of the camera. The visual objects 910 may correspond to different setting values (e.g., aspect ratio, flashlight, brightness, resolution, and/or frames per seconds (FPS)) of the camera, respectively. The visual object 910 may include icons representing each of the above-described setting values.

Referring to FIG. 9, in the state 901 of displaying the visual objects 910 arranged along a horizontal direction on the flexible display 150, the electronic device 101 may identify a shuttle gesture associated with a first folding axis 131. For example, in the state 901, a user holding the electronic device 101 may change a first angle (e.g., a first angle 141 of FIG. 1) between the first housing 111 and the second housing 112 from a preset angle in the unfolded state to another angle exceeding a threshold angle, and then restore it to the preset angle within the preset period, by rotating the first housing 111 with respect to the second housing 112, by using a left hand 814. In response to the shuttle gesture, the electronic device 101 may switch from the state 901 to a state 902.

In the state 902 of FIG. 9, the electronic device 101 may display the visual objects 910 based on an edge of the first housing 111 parallel to the first folding axis 131 associated with the shuttle gesture. For example, the electronic device 101 may display the visual objects 910 arranged along a direction of an edge 150-1 of the flexible display 150 positioned on the first housing 111. Through the visual objects 910 arranged along the direction of the edge 150-1, the electronic device 101 may receive an input for selecting any one of the visual objects 910, performed by the left hand 814 adjacent to the edge 150-1.

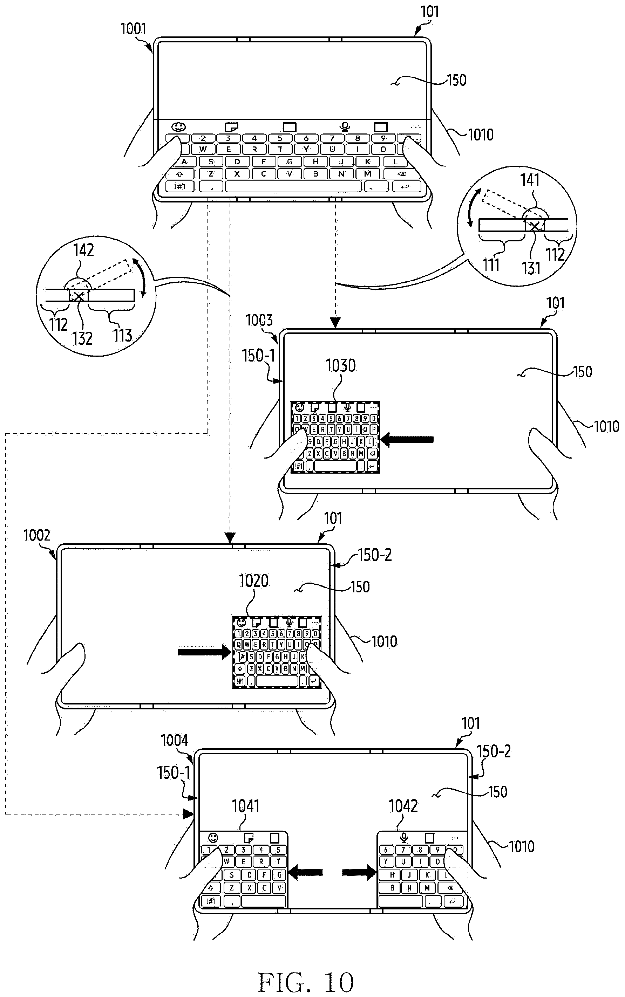

As described above, an operation of the electronic device 101 for changing the position, size, and/or layout of the visual object included in the screen provided by the software application has been described, but the embodiment is not limited thereto. Hereinafter, an operation of the electronic device 101 associated with a software keyboard (hereinafter, a soft keyboard) for inputting characters based on a touch input will be described with reference to FIG. 10.

FIG. 10 exemplarily illustrates states 1001, 1002, 1003, and 1004 of an electronic device 101 switched based on rotation between housings (e.g., a first housing 111, a second housing 112, and a third housing 113). The electronic device 101 of FIG. 1 and/or FIG. 2 may include the electronic device 101 of FIG. 10. For example, the electronic device 101 and/or a processor 210 of FIG. 2 may perform an operation of the electronic device 101 described with reference to FIG. 10. The operation of the electronic device 101 described with reference to FIG. 10 may be associated with operations of FIG. 4 and/or FIG. 5.

Referring to FIG. 10, the different states 1001, 1002, 1003, and 1004 of the electronic device 101 distinguished by a shuttle gesture are illustrated. In the state 1001 included in the unfolded state, the electronic device 101 may display a screen provided from a software application on a flexible display 150. Through the screen, the electronic device 101 may execute a function for inputting one or more characters. For example, the electronic device 101 may display a soft keyboard 1010 occupying at least a portion of the flexible display 150 and identify a user input for inputting one or more characters based on a touch input performed on the soft keyboard 1010. Referring to FIG. 10, the soft keyboard 1010 including buttons arranged in a QWERTY manner is exemplarily illustrated, but the embodiment is not limited thereto.

In the state 1001 of FIG. 10, the electronic device 101 may display the soft keyboard 1010 extended from the first housing 111 to the third housing 113 crossing the second housing 112 of the electronic device 101, along a horizontal direction of the flexible display 150. For example, a width of the soft keyboard 1010 displayed in the state 1001 may correspond to width of the flexible display 150. A height of the soft keyboard 1010 may be less than a height of the flexible display 150. In the state 1001 of displaying the soft keyboard 1010, the electronic device 101 may identify a shuttle gesture based on rotation of a first folding axis 131 and/or a second folding axis 132. For example, the electronic device 101 that identified the shuttle gesture based on the second folding axis 132 may switch from the state 1001 to the state 1002. The electronic device 101 that identified the shuttle gesture based on the first folding axis 131 may switch from the state 1001 to the state 1003. The electronic device 101 that substantially simultaneously identified the shuttle gestures on each of the first folding axis 131 and the second folding axis 132 may switch from the state 1001 to the state 1004. Based on switching from the state 1001 to the states 1002, 1003, and 1004, the electronic device 101 may cease displaying the soft keyboard 1010 having a size based on the width of the flexible display 150.

Referring to the state 1002 of FIG. 10, in response to a shuttle gesture associated with the second folding axis 132, the electronic device 101 may display a soft keyboard 1020 on an edge 150-2 of the flexible display 150 adjacent to the second folding axis 132. The soft keyboard 1020 displayed in the state 1002 may be smaller than the width (e.g., the width of the flexible display 150) of the soft keyboard 1010 displayed in the state 1001 before the state 1002. For example, the electronic device 101 may display the soft keyboard 1020 having a width of a portion of a display 110 positioned on the third housing 113 in the state 1002 displaying the soft keyboard 1020 adjacent to the edge 150-2 of the flexible display 150 positioned on the third housing 113.

In the state 1002 of FIG. 10, by using the soft keyboard 1020 adjacent to the edge 150-2 of the flexible display 150, the electronic device 101 may support a user input (e.g., a user input for touching at least one of buttons included in the soft keyboard 1020) based on a body part adjacent to the edge 150-2. In the state 1002, in case that a shuttle gesture for the second folding axis 132 is performed again, the electronic device 101 may display the soft keyboard 1010 having a width corresponding to the width of the flexible display 150 by switching back from the state 1002. In the state 1002, in case that a shuttle gesture for the first folding axis 131 is performed, the electronic device 101 may switch from the state 1002 to the state 1004.

Referring to the state 1003 of FIG. 10, in response to a shuttle gesture associated with the first folding axis 131, the electronic device 101 may display a soft keyboard 1030 on an edge 150-1 of the flexible display 150 adjacent to the first folding axis 131. A size of the soft keyboard 1030 displayed in the state 1003 may coincide with a size of the soft keyboard 1020 displayed in the state 1002. For example, the electronic device 101 may determine a width of the soft keyboard 1030 as a width of a portion of the flexible display 150 positioned on the first housing 111 on which the soft keyboard 1030 is displayed. In the state 1003, in case that the shuttle gesture for the first folding axis 131 is performed again, the electronic device 101 may switch from the state 1003 back to the state 1001. In the state 1003, in case that a shuttle gesture for the second folding axis 132 is performed, the electronic device 101 may switch from the state 1003 to the state 1002.

In the state 1004 of FIG. 10, the electronic device 101 may display sub-soft keyboards 1041 and 1042 corresponding to different portions of the soft keyboard 1010 that has been displayed in the state 1001. Each of the sub-soft keyboards 1041 and 1042 may be displayed adjacent to different edges 150-1 and 150-2 of the flexible display 150. For example, the sub-soft keyboard 1041 displayed adjacent to the left edge 150-1 of the flexible display 150 may include buttons included in the left half of the buttons displayed on the soft keyboard 1010. For example, a sub-soft keyboard 1052 displayed adjacent to the right edge 150-2 of the flexible display 150 may include buttons included in the right half of the buttons displayed on the soft keyboard 1010. In the state 1004 displaying the sub-soft keyboards 1051 and 1052, the electronic device 101 may represent division of the soft keyboard 1010, by ceasing displaying the soft keyboard 1010 that was displayed in the state 1001.

In the state 1004 of FIG. 10, by using the sub-soft keyboard 1041 displayed based on a position adjacent to the left edge 150-1 of the flexible display 150 and the sub-soft keyboard 1042 displayed based on a position adjacent to the right edge 150-2 of the flexible display 150, the electronic device 101 may obtain text through each of two hands holding both edges 150-1 and 150-2 of the flexible display 150. For example, a user holding both edges 150-1 and 150-2 of the electronic device 101 may input the text, by touch the sub-soft keyboards 1041 and 1042 by using a finger, without releasing hands holding the edges 150-1 and 150-2. In the state 1001, in order to touch buttons (e.g., buttons displayed on a portion of the flexible display 150 positioned on the second housing 112) in the soft keyboard 1010 adjacent to center of the flexible display 150, the user must move any one of the hands holding the edges 150-1 and 150-2. The electronic device 101 may assist a touch input based on the soft keyboard, by displaying the soft keyboard at a position adj acent to at least one of the hands holding the edges 150-1 and 150-2 by using the shuttle gesture based on the first folding axis 131 and/or the second folding axis 132.

In the state 1004, the electronic device 101 that identified the shuttle gesture based on the first folding axis 131 may display the soft keyboard 1030 on the edge 150-1 of the flexible display 150 adjacent to the first folding axis 131, by switching to the state 1003. In the state 1004, the electronic device 101 that identified the shuttle gesture associated with the second folding axis 132 may display the soft keyboard 1020 on the edge 150-2 of the flexible display 150 corresponding to the second folding axis 132, by switching to the state 1002. In the state 1004, the electronic device 101 that substantially simultaneously identified shuttle gestures corresponding to each of the first folding axis 131 and second folding axis 132 may cease displaying the sub-soft keyboards 1041 and 1042 and may display the soft keyboard 1010 having the size based on the width of the flexible display 150, by switching to the state 1001.

Hereinafter, an exemplary operation of the electronic device 101 of changing a size and/or a layout of one or more screens provided from the software application based on the shuttle gesture will be described with reference to FIGS. 11 to 13.

FIG. 11 exemplarily illustrates states 1101 and 1102 of an electronic device 101 switched based on rotation between housings (e.g., a second housing 112 and/or a third housing 113). The electronic device 101 of FIG. 1 and/or FIG. 2 may include the electronic device 101 of FIG. 11. For example, the electronic device 101 and/or a processor 210 of FIG. 2 may perform an operation of the electronic device 101 described with reference to FIG. 11. The operation of the electronic device 101 described with reference to FIG. 11 may be associated with operations of FIG. 4 and/or FIG. 5.

Referring to FIG. 11, the different states 1101 and 1102 of the electronic device 101 displaying a screen provided from a software application (e.g., software applications 250 of FIG. 2 and/or a software application 510 of FIG. 5) are illustrated. Based on execution of a launcher application (or a home application) for displaying a screen (e.g., a launcher screen and/or a home screen) including a list of software applications installed in the electronic device 101, the electronic device 101 may display a screen on a flexible display 150. Although the exemplary states 1101 and 1102 of the electronic device 101 displaying the launcher screen are illustrated, the electronic device 101 may perform the operations described with reference to FIG. 11 for another software application (e.g., an alarm application) installed in the electronic device 101.

In an embodiment, the software application may be designed to be executed in different modes for each of the layouts in order to provide different layouts according to a size of the flexible display 150. The electronic device 101 may execute the software application based on any one mode among the modes based on the size of the flexible display 150. The modes may include a first mode (e.g., a tablet mode) for providing a layout based on a relatively large size of a display of a tablet PC and/or a second mode (e.g., a mobile mode) for providing a layout based on a relatively small size of a display of a mobile phone such as a smartphone.

Referring to FIG. 11, in the state 1101 in an unfolded state, the electronic device 101 may display a screen having a size of an active area of the flexible display 150, by executing the software application in the first mode for using an entire active area of the flexible display 150. The first mode may correspond to the tablet mode. Referring to FIG. 11, in the state 1101 providing a screen based on the first mode, the electronic device 101 may identify a shuttle gesture associated with a first folding axis 131 and/or a second folding axis 132.

In the exemplary state 1101 of FIG. 11, the electronic device 101 that identified the shuttle gesture associated with the second folding axis 132 may switch to the state 1102. In the state 1102, the electronic device 101 may display a screen having a size corresponding to the second mode on the flexible display 150, by executing the software application in the second mode (e.g., the mobile mode) different from the first mode. Referring to FIG. 11, the size of the screen displayed in the state 1102 may be smaller than the size (e.g., the size of the flexible display 150) of the screen displayed in the state 1101. The electronic device 101 that identified the shuttle gesture associated with the second folding axis 132 may display the screen of the second mode based on an edge 150-2 of the flexible display 150.

Referring to FIG. 11, while providing the screen based on any one mode among the first mode and the second mode, the electronic device 101 may change the size of the screen displayed on the flexible display 150 by using the shuttle gesture based on the first folding axis 131 and/or the second folding axis 132. For example, in the state 1102, the electronic device 101 that identified the shuttle gesture associated with the first folding axis 131 and/or the second folding axis 132 may be switched to the state 1101 displaying the screen based on the first mode.

Each of the states 1101 and 1102 of FIG. 11 may be referred to as a two-handed mode (or a two-handed state) and a one-handed mode (or a one-handed state) according to a shape of the screen provided through the flexible display 150. For example, the state 1101 providing a screen having a size of the entire flexible display 150 may be referred to as the two-handed mode in terms of identifying all of a gesture of a right hand 813 and a gesture of a left hand 814. For example, the state 1102 displaying the screen on the right portion of the flexible display 150 may be referred to as the one-handed mode (or a right-handed mode) from in terms of capable of identifying the gesture of the right hand 813 among the gesture of the right hand 813 or the gesture of the left hand 814. The embodiment is not limited thereto, and the electronic device 101 may display the screen on a portion including a left edge 150-1 of the flexible display 150. A state in which the electronic device 101 displays the screen on the portion including the left edge 150-1 of the flexible display 150 may be referred to as the one-handed mode (or a left-handed mode). According to an embodiment, the electronic device 101 may switch or enter into to either one of the two-handed mode or the one-handed mode based on the shuttle gesture associated with the first folding axis 131 and/or the second folding axis 132.

As described above, the electronic device 101 may change the size and/or a position of the screen displayed on the flexible display 150 by adjusting the mode of the software application. For example, in response to the shuttle gesture based on the right hand 813, the electronic device 101 may move the screen displayed on the flexible display 150 to the position adjacent to the right hand 813. Based on movement of the screen, the electronic device 101 may assist in controlling the screen based on the right hand 813.

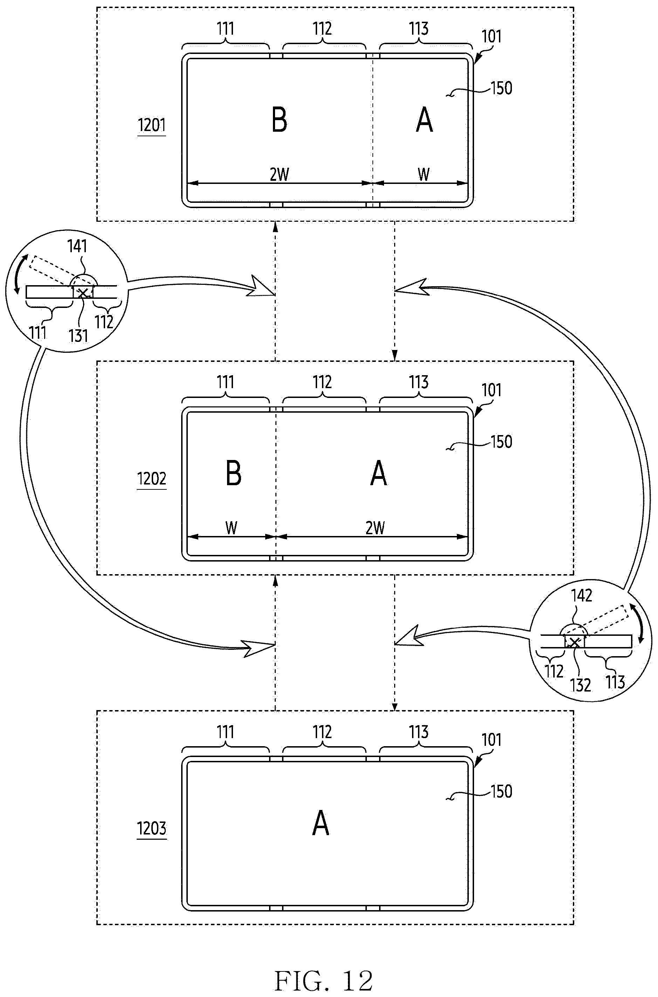

Hereinafter, an operation associated with the shuttle gesture of the electronic device 101 displaying a plurality of screens based on multi-tasking will be described with reference to FIGS. 12 to 13.

FIG. 12 exemplarily illustrates states 1201, 1202, and 1203 of an electronic device switched based on rotation between housings (a first housing 111, a second housing 112 and/or a third housing 113). An electronic device 101 of FIG. 1 and/or FIG. 2 may include the electronic device 101 of FIG. 12. For example, the electronic device 101 and/or a processor 210 of FIG. 2 may perform an operation of the electronic device 101 described with reference to FIG. 12. The operation of the electronic device 101 described with reference to FIG. 12 may be associated with operations of FIG. 4 and/or FIG. 5.

Referring to FIG. 12, the different states 1201, 1202, and 1203 of the electronic device 101 displaying a plurality of screens (e.g., a screen A and/or a screen B) on different portions (e.g., portions that do not overlap each other) of a flexible display 150 are illustrated, based on execution of a plurality of software applications. In the state 1201 of FIG. 12, the screen A and the screen B having different widths w and 2w may be displayed on the flexible display 150. In the state 1201 included in an unfolded state, in response to a shuttle gesture associated with a first folding axis 131 and/or a second folding axis 132, the electronic device 101 may change widths (or a ratio between the widths) of the screen A and/or the screen B displayed on the flexible display 150. For example, in the state 1201, the electronic device 101 that identified the shuttle gesture associated with the second folding axis 132 may switch to the state 1202.

Based on identifying the shuttle gesture associated with the second folding axis 132, the electronic device 101 may increase a width of the screen A displayed on a portion of the flexible display 150 positioned on the third housing 113 associated with the second folding axis 132. Referring to FIG. 12, in the state 1202, the electronic device 101 may increase the width of the screen A by a width (e.g., w) of the flexible display 150 positioned on the third housing 113. The electronic device 101 that increased the width of the screen A may reduce a width of the screen B. For example, in the state 1202, the electronic device 101 may display the screen A and the screen B having widths 2w and w.

Referring to FIG. 12, in the state 1202, the electronic device 101 that identified the shuttle gesture for the second folding axis 132 may switch to the state 1203. In the state 1203, the electronic device 101 may display the screen A based on a size of an entire active area of the flexible display 150. In the state 1203 of displaying the screen A based on the size of the entire active area of the flexible display 150, the electronic device 101 may at least temporarily cease displaying the screen B. For example, the electronic device 101 may temporarily cease executing a software application corresponding to the screen B.

Referring to FIG. 12, in the state 1203 of displaying the screen A on the entire active area of the flexible display 150, the electronic device 101 may switch to the state 1202 based on identifying the shuttle gesture associated with the first folding axis 131. The electronic device 101 that identified the shuttle gesture associated with the first folding axis 131 in the state 1202 may increase a width of the screen B displayed through a portion of the flexible display 150 positioned on the first housing 111 associated with the first folding axis 131, by switching to the state 1201.

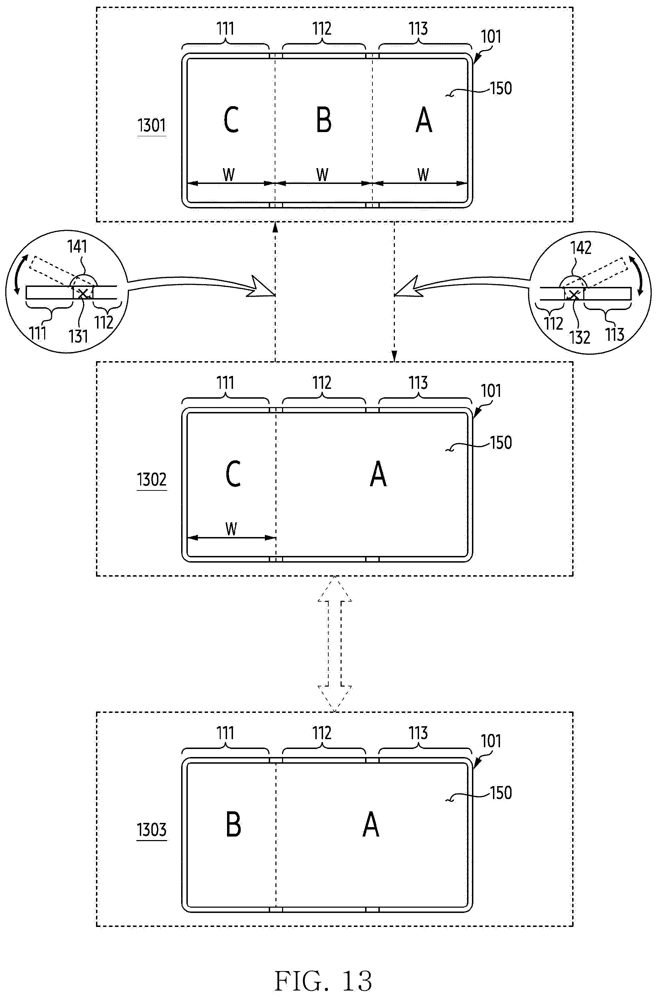

FIG. 13 exemplarily illustrates states of an electronic device switched based on rotation between housings (a first housing 111, a second housing 112, and/or a third housing 113). An electronic device 101 of FIG. 1 and/or FIG. 2 may include the electronic device 101 of FIG. 13. For example, the electronic device 101 and/or a processor 210 of FIG. 2 may perform an operation of the electronic device 101 described with reference to FIG. 13. The operation of the electronic device 101 described with reference to FIG. 13 may be associated with operations of FIG. 4 and/or FIG. 5.

Referring to FIG. 13, a state 1301 of displaying a plurality of screens (e.g., a screen A, a screen B, and a screen C) on different portions of a flexible display 150 is illustrated, based on execution of a plurality of software applications. In the state 1301, the electronic device 101 may display the screen A, the screen B, and the screen C at different portions of the flexible display 150 positioned in each of the first housing 111, the second housing 112, and the third housing 113. In case that the first housing 111, the second housing 112, and the third housing 113 have the same size each other, the sizes (e.g., a width and/or a height) of the screen A, the screen B, and the screen C displayed on different portions of the flexible display 150 may be the same each other.

Referring to FIG. 13, in the state 1301 included in an unfolded state, the electronic device 101 may identify a shuttle gesture associated with a first folding axis 131 and/or the second folding axis 132. The electronic device 101 that identified the shuttle gesture for the second folding axis 132 may switch from the state 1301 to the state 1302. In the state 1302, the electronic device 101 may increase a width of the screen A displayed on a portion of the flexible display 150 positioned on the third housing 113 corresponding to the second folding axis 132. For example, in the state 1302, the electronic device 101 may increase the width of the screen A by a width w of the portion of the flexible display 150 positioned on the third housing 113 (2w). In the state 1302, the electronic device 101 that identified the shuttle gesture for the first folding axis 131 may display the screen A, the screen B, and the screen C on the flexible display 150, by switching to the state 1301.

In the state 1302 of FIG. 13, the electronic device 101 that increases the width of the screen A may cease displaying other screens (the screen B and/or the screen C) displayed on the flexible display 150. For example, the electronic device 101 may cease displaying the screen B that was displayed through a portion of the flexible display 150 positioned on the second housing 112. Since the screen B is not displayed, in the state 1302, the electronic device 101 may display each of the screen A and the screen C based on the widths w and 2w.

Although the operation of the electronic device 101 switching to the state 1302 based on the shuttle gesture for the second folding axis 132 in the state 1301 has been described, the embodiment is not limited thereto. For example, the electronic device 101 may switch to a state 1303 based on identifying the shuttle gesture for the second folding axis 132 in the state 1301. In the state 1303, the electronic device 101 may increase the screen A by the width w and may cease displaying the screen C that was displayed through a portion of the flexible display 150 positioned on the first housing 111, among other screens different from the screen A. Whether the electronic device 101 in the state 1301 switches to which one of the states 1302 and 1303 based on the shuttle gesture with respect to the second folding axis 132 may be determined according to a setting value of the electronic device 101. The embodiment is not limited thereto, and the electronic device 101 may hide another screen different from a specific screen last focused (or selected) by the user among the screen B and the screen C while increasing the screen A.

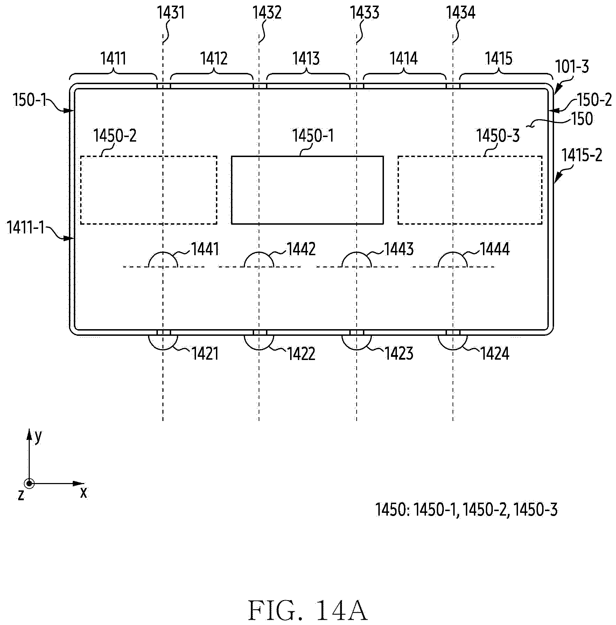

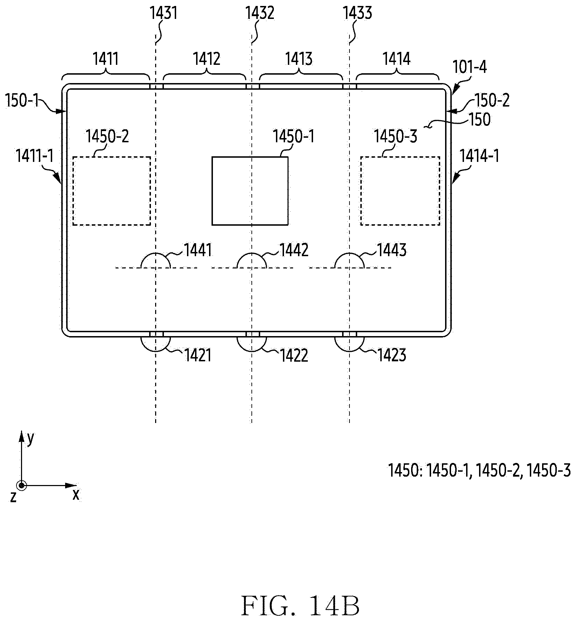

Although an embodiment of the electronic device 101 including two folding axes has been described, the embodiment is not limited thereto. Hereinafter, an embodiment of the electronic device 101 including more than two folding axes will be described with reference to FIGS. 14A and/or 14B.

FIGS. 14A and 14B illustrate an embodiment of a deformable electronic device 101-3. The electronic device 101-3 of FIGS. 14A and/or 14B may be an example of an electronic device 101 of FIGS. 1 and/or 2. An operation of the electronic device 101-3 described with reference to FIGS. 14A and/or 14B may be performed by the electronic device 101 and/or a processor 210 of FIG. 2.

Referring to FIG. 14A, according to an embodiment, the housing of the electronic device 101-3 may be divided into five housings (a first housing 1411, a second housing 1412, a third housing 1413, a fourth housing 1414 and/or a fifth housing 1415). The housing of the electronic device 101-3 may include a first hinge assembly 1421 for rotatably coupling the second housing 1412 to the first housing 1411, a second hinge assembly 1422 for rotatably coupling the third housing 1413 to the second housing 1412, a third hinge assembly 1423 for rotatably coupling the fourth housing 1414 to the third housing 1413, and a fourth hinge assembly 1424 for coupling the fifth housing 1415 to the fourth housing 1414.

Referring to FIG. 14A, in the first hinge assembly 1421, a first folding axis 1431 of the first housing 1411 and the second housing 1412 may be formed. In the second hinge assembly 1422, a second folding axis 1432 between the second housing 1412 and the third housing 1413 may be formed. In the third hinge assembly 1423, a third folding axis 1433 of the third housing 1413 and the fourth housing 1414 may be formed. In the fourth hinge assembly 1424, a fourth folding axis 1434 between the fourth housing 1414 and the fifth housing 1415 may be formed.

Referring to FIG. 14B, according to an embodiment, a housing of an electronic device 101-4 may be divided into four housings (the first housing 1411, the second housing 1412, the third housing 1413 and/or the fourth housing 1414). The housing of the electronic device 101-4 may include a first hinge assembly 1421 for rotatably coupling the second housing 1412 to the first housing 1411, a second hinge assembly 1422 for rotatably coupling the third housing 1413 to the second housing 1412, and a third hinge assembly 1423 for rotatably coupling the fourth housing 1414 to the third housing 1413.

Referring to FIG. 14B, in the first hinge assembly 1421, the first folding axis 1431 of the first housing 1411 and the second housing 1412 may be formed. In the second hinge assembly 1422, the second folding axis 1432 between the second housing 1412 and the third housing 1413 may be formed. In the third hinge assembly 1423, the third folding axis 1433 of the third housing 1413 and the fourth housing 1414 may be formed.

In an embodiment of FIGS. 14A and/or 14B, the electronic devices 101-3 and 101-4 may identify rotation at the first folding axis 1431 to the fourth folding axis 1434 by using one or more sensors (e.g., a sensor 230 of FIG. 2). For example, the electronic devices 101-3 and 101-4 may identify a first angle 1441 between the first housing 1411 and the second housing 1412, a second angle 1442 between the second housing 1412 and the third housing 1413, and a third angle 1443 between the third housing 1413 and the fourth housing 1414, by using one or more sensors. The electronic device 101-3 of FIG. 14A may additionally identify a fourth angle 1444 between the fourth housing 1414 and the fifth housing 1415.

The electronic devices 101-3 and 101-4 of FIGS. 14A and/or 14B may identify states of the electronic devices 101-3 and 101-4 that are distinguished based on the first angle 1441 to the fourth angle 1444, based on sensor data of one or more sensors. The states of the electronic devices 101-3 and 101-4 that are distinguished by the first angle 1441 to the fourth angle 1444, may include an unfolded state, a sub-folded state, and/or a folded state described with reference to FIGS. 3A and/or 3B.

Similar to the above description with reference to FIGS. 1 to 13, the electronic devices 101-3 and 101-4 of FIGS. 14A and/or 14B may identify a shuttle gesture performed on at least one of the first folding axis 1431 to the fourth folding axis 1434. Based on the shuttle gesture, the electronic devices 101-3 and 101-4 may adjust a position of the visual object 1450 displayed on the flexible display 150. As illustrated in FIG. 14A, in the electronic device 101-3 including more than two folding axes, a function of adjusting a position of the visual object 1450 based on the shuttle gesture may be assigned to the first folding axis 1431 positioned at the first and the fourth folding axis 1434 positioned at the last, based on an x-axis direction of FIG. 14A. Similarly, the electronic device 101-4, including the three folding axes of FIG. 14B, may selectively execute the functions assigned to each of the first folding axis 1431 to the third folding axis 1433 in response to the shuttle gesture identified in each of the first folding axis 1431 to the third folding axis 1433.

For example, the electronic device 101-3 that displays a visual object 1450-1 at center of the flexible display 150 may display a visual object 1450-2 at an edge 150-1 of the flexible display 150 adjacent to an edge 1411-1 of the first housing 1411 in response to the shuttle gesture for the first folding axis 1431 and/or the second folding axis 1432. For example, the electronic device 101-3 that displays the visual object 1450-1 at the center of the flexible display 150 may display the visual object 1450-3 at an edge 150-2 of the flexible display 150 adjacent to an edge 1415-2 of the fifth housing 1415 in response to the shuttle gesture for the third folding axis 1433 and/or the fourth folding axis 1434.

The visual object 1450 of FIGS. 14A and/or 14B may correspond to a visual object 170 of FIG. 1, a visual object 710 of FIG. 7, a visual object 810 of FIG. 8, visual objects 910 of FIG. 9, and a soft keyboard 1010 of FIG. 10. For example, the electronic device 101-3 including four folding axes may perform the operation described with reference to FIGS. 1 to 13 in response to a shuttle gesture based on any one of the folding axes. Similarly, the electronic device 101-4 including three folding axes may perform the operations described with reference to FIGS. 1 to 13 in response to the shuttle gesture based on any one of the folding axes.

Referring to FIG. 14A, in the electronic device 101-3 including the first folding axis 1431 to the fourth folding axis 1434, the first folding axis 1431 and the fourth folding axis 1434 positioned at both ends may be matched to a function of changing visual characteristic (e.g., position, a shape, and/or a size of the visual object 1450 in the flexible display 150) of the visual object 1450 displayed on the flexible display 150. For example, based on the shuttle gesture for the first folding axis 1431, the electronic device 101-3 may move the visual object 1450 in the flexible display 150 to the edge 150-1 of the flexible display 150 adjacent to the first folding axis 1431. For example, based on the shuttle gesture for the fourth folding axis 1434, the electronic device 101-3 may move the visual object 1450 in the flexible display 150 to the edge 150-2 of the flexible display 150 adjacent to the fourth folding axis 1434. In the above example, the electronic device 101-3 may match a function (e.g., volume control) different from the above-described function to the second folding axis 1432 and/or the third folding axis 1433.

Similarly, the electronic device 101-4, including the first folding axis 1431 to the third folding axis 1433, may move the visual object 1450 to any one edge among the edges 150-1 and 150-2 of the flexible display 150, based on the shuttle gesture performed on the folding axes (e.g., the first folding axis 1431, and the third folding axis 1433) positioned at both ends of the folding axes. For example, the electronic device 101-4 that identified the shuttle gesture for the first folding axis 1431 may move the visual object 1450-1 positioned at the center of the flexible display 150 to the edge 150-1 of the flexible display 150 adjacent to the first folding axis 1431. For example, after identifying the shuttle gesture for the first folding axis 1431, the electronic device 101-4 may display the visual object 1450-2 instead of the visual object 1450-1. For example, the electronic device 101-4 that identified the shuttle gesture for the third folding axis 1433 may move the visual object 1450-1 positioned at the center of the flexible display 150 to the edge 150-2 of the flexible display 150 adjacent to the third folding axis 1433. For example, after identifying the shuttle gesture for the third folding axis 1433, the electronic device 101-4 may display the visual object 1450-3 instead of the visual object 1450-1.

The embodiment is not limited thereto, and functions to be executed in response to the shuttle gesture performed on each of the first folding axis 1431 to fourth folding axis 1434 may be customized. For example, the electronic device 101-3 that identified the shuttle gesture corresponding to the first folding axis 1431 may execute a function (e.g., volume adjustment of the electronic device 101-3, and/or movement of the visual object 1450) assigned to the first folding axis 1431. The function assigned to the first folding axis 1431 may be different from the function to be executed in response to the shuttle gesture on the second folding axis 1432. For example, in response to the shuttle gesture for the first folding axis 1431, the electronic device 101-3 may execute a function for moving the position of the visual object 1450. For example, in response to the shuttle gesture for the second folding axis 1432, the electronic device 101-3 may adjust brightness of the flexible display 150 and/or may change volume of a speaker.

In an embodiment, a function assigned to the folding axes of the electronic devices 101-3 and 101-4 of FIGS. 14A and/or 14B and executed in response to the shuttle gesture may be set by a software application executed by the electronic device. For example, while a web browser application is being executed, in response to the shuttle gesture for the second folding axis 1432 of FIG. 14A, the electronic device 101-3 may display a web page that has been displayed before the web page currently displayed through the flexible display 150, based on a function (e.g., a backward function) supported by the web browser application. The function supported by the web browser application may include not only the backward function but also a forward function. For example, the electronic device 101-3 that executes an application for playing a video may execute a function for searching for the video based on the shuttle gesture. For example, based on the shuttle gesture, the electronic device 101-3 may execute a function (e.g., home button, back and/or multitasking functions) for searching recently executed software applications and/or screens. For example, in response to the shuttle gesture, the electronic device 101-3 may display a status bar and/or a notification panel. For example, in response to the shuttle gesture, the electronic device 101-3 may execute a function for changing a setting value pre-registered by the user, such as language and/or resolution.

As described above, according to an embodiment, the electronic device 101 may move a visual object and/or a screen displayed on the flexible display 150 based on an input for temporarily changing a state of the electronic device 101 from the unfolded state, based on the folding axis. The visual object and/or the screen displayed on the flexible display 150 may be moved to assist a user's touch input on the flexible display 150.

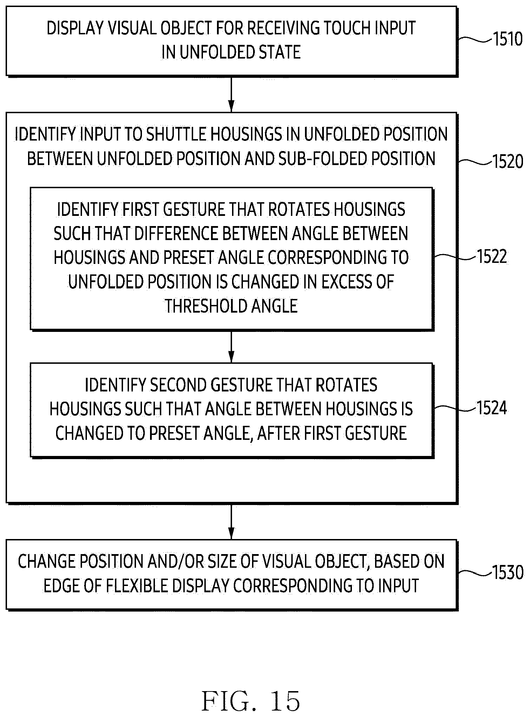

FIG. 15 illustrates a flowchart of an electronic device according to an embodiment. An electronic device 101 of FIGS. 1 and 2 may perform an operation of the electronic device described with reference to FIG. 15. For example, the electronic device 101 and/or a processor 210 of FIG. 2 may perform operations of the electronic device described with reference to FIG. 15. The operations of FIG. 15 may be associated with operations of FIG. 4 and/or 5.

In the following embodiment, each operation may be performed in sequence, but is not necessarily performed in sequence. For example, an order of each operation may be changed, and at least two operations may be performed in parallel.

Referring to FIG. 15, in operation 1510, according to an embodiment, a processor of the electronic device may display a visual object for receiving a touch input in an unfolded state. The visual object of the operation 1510 may include a visual object 170 of FIG. 1, a visual object 710 of FIG. 7, a visual object 810 of FIG. 8, visual objects 910 of FIG. 9, a soft keyboard 1010 of FIG. 10, and/or a visual object 1450 of FIGS. 14A and/or 14B.

Referring to FIG. 15, in operation 1520, according to an embodiment, the processor of the electronic device may identify an input to shuttle housings in unfolded position between the unfolded position and a sub-folded position. The input of the operation 1520 may include a shuttle gesture described with reference to FIGS. 1 to 14B. The processor may perform operations 1522 and 1524 of FIG. 15 to identify the input of the operation 1520.

Referring to FIG. 15, in operation 1522, according to an embodiment, the processor of the electronic device may identify a first gesture that rotates the housings such that a difference between an angle between the housings and a preset angle corresponding to the unfolded position is changed in excess of a threshold angle. Based on the operation 1522, the processor may identify an angle between housings that is changed in excess of the threshold angle (about 30 °) from the preset angle (about 180 °) in the unfolded state.

Referring to FIG. 15, in operation 1524, according to an embodiment, the processor of the electronic device may identify a second gesture that rotates the housings such that the angle between the housings is changed to the preset angle, after the first gesture. After identifying the first gesture based on the operation 1522, the processor may identify the second gesture of operation 1524 with a time difference less than a preset period. Based on the second gesture of the operation 1524, the angle between the housings may be restored to the preset angle (about 180 °).

Referring to FIG. 15, in operation 1530, according to an embodiment, the processor of the electronic device may change a position and/or a size of the visual object, based on an edge of a flexible display corresponding to the input of the operation 1520. For example, states 702 and 703 of FIG. 7, a state 802 of FIG. 8, a state 902 of FIG. 9 and states 1002, 1003, and 1004 of FIG. 10 may be exemplary states of the electronic device that performed the operation 1520.

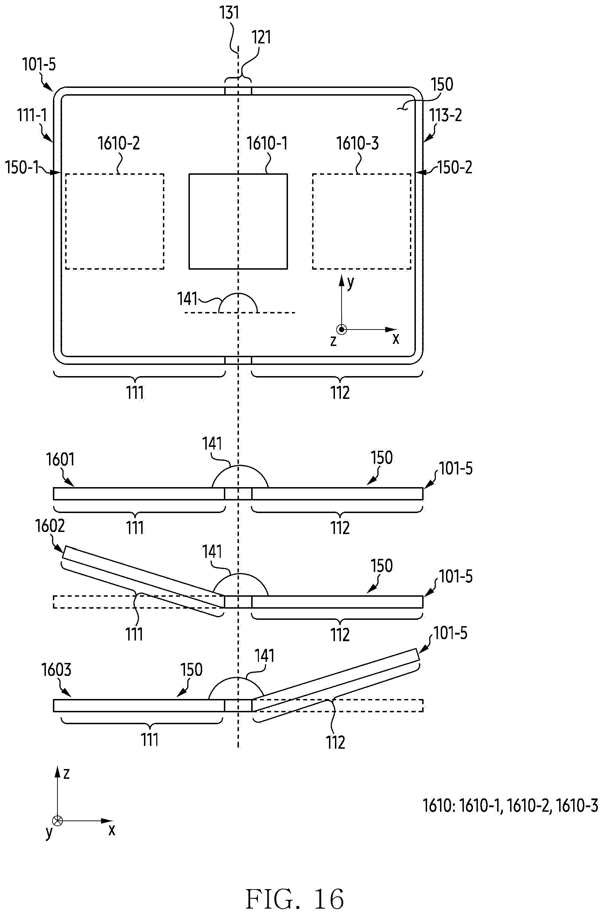

FIG. 16 illustrates an embodiment of a deformable electronic device 101-5. The electronic device 101-5 of FIG. 16 may be an example of an electronic device 101 of FIGS. 1 and/or 2. An operation of the electronic device 101-5 described with reference to FIG. 16 may be performed by the electronic device 101 and/or a processor 210 of FIG. 2.

Referring to FIG. 16, according to an embodiment, a housing (e.g., a foldable housing) of the electronic device 101-5 may be divided into two housings (a first housing 111 and a second housing 112). The housing of the electronic device 101-5 may include a first hinge assembly 121 for rotatably coupling the second housing 112 to the first housing 111. A sensor (e.g., a sensor 230 of FIG. 2) of the electronic device 101-5 may be configured to identify a first angle 141 between the first housing 111 and the second housing 112. For example, in the first hinge assembly 121, a first folding axis 131 between the first housing 111 and the second housing 112 may be formed.

Referring to FIG. 16, a state of the electronic device 101-5 may be distinguished by the first angle 141. For example, the above state of the electronic device 101-5 may include an unfolded state, a sub-folded state, and/or a folded state described with reference to FIGS. 3A and/or 3B. Referring to FIG. 16, in a state 1601 corresponding to the unfolded state, the electronic device 101-5 may identify a shuttle gesture performed based on the first folding axis 131. By the shuttle gesture, the state of the electronic device 101-5 may be switched from the state 1601 to a state 1602 in which a position and/or a direction of the second housing 112 is maintained and the first housing 111 is rotated, and then may be switched back to the state 1601 again within the preset period. The embodiment is not limited thereto, and by the shuttle gesture, the state of the electronic device 101-5 may be switched from the state 1601 to a state 1603 in which a position and/or a direction of the first housing 111 is maintained and the second housing 112 is rotated, and then may be switched back to the state 1601 again within the preset period.

As described above with reference to FIGS. 1 to 15, the electronic device 101-5 may change a position of a visual object 1610 displayed on the flexible display 150 based on the shuttle gesture. In the state 1601 corresponding to the unfolded state, the electronic device 101-5 may display a visual object 1610-1 at a position including center of the flexible display 150 including the first folding axis 131. The electronic device 101-5 that identified that it is switched from the state 1601 to the state 1602 based on the shuttle gesture and then switched back to the state 1601 within the preset period may display a visual object 1610-2 at a position adjacent to a first edge 150-1 of the flexible display 150 positioned on the first housing 111. The electronic device 101-5 that identified that it is switched from the state 1601 to the state 1603 based on the shuttle gesture and then switched back to the state 1601 within the preset period may display a visual object 1610-3 at a position adjacent to a second edge 150-2 of the flexible display 150 positioned on the second housing 112.

FIG. 17 is a block diagram illustrating an electronic device 1701 in a network environment 1700 according to various embodiments. Referring to FIG. 17, the electronic device 1701 in the network environment 1700 may communicate with an electronic device 1702 via a first network 1798 (e.g., a short-range wireless communication network), or at least one of an electronic device 1704 or a server 1708 via a second network 1799 (e.g., a long-range wireless communication network). According to an embodiment, the electronic device 1701 may communicate with the electronic device 1704 via the server 1708. According to an embodiment, the electronic device 1701 may include a processor 1720, memory 1730, an input module 1750, a sound output module 1755, a display module 1760, an audio module 1770, a sensor module 1776, an interface 1777, a connecting terminal 1778, a haptic module 1779, a camera module 1780, a power management module 1788, a battery 1789, a communication module 1790, a subscriber identification module (SIM) 1796, or an antenna module 1797. In some embodiments, at least one of the components (e.g., the connecting terminal 1778) may be omitted from the electronic device 1701, or one or more other components may be added in the electronic device 1701. In some embodiments, some of the components (e.g., the sensor module 1776, the camera module 1780, or the antenna module 1797) may be implemented as a single component (e.g., the display module 1760).

The processor 1720 may execute, for example, software (e.g., a program 1740) to control at least one other component (e.g., a hardware or software component) of the electronic device 1701 coupled with the processor 1720, and may perform various data processing or computation. According to an embodiment, as at least part of the data processing or computation, the processor 1720 may store a command or data received from another component (e.g., the sensor module 1776 or the communication module 1790) in volatile memory 1732, process the command or the data stored in the volatile memory 1732, and store resulting data in non-volatile memory 1734. According to an embodiment, the processor 1720 may include a main processor 1721 (e.g., a central processing unit (CPU) or an application processor (AP)), or an auxiliary processor 1723 (e.g., a graphics processing unit (GPU), a neural processing unit (NPU), an image signal processor (ISP), a sensor hub processor, or a communication processor (CP)) that is operable independently from, or in conjunction with, the main processor 1721. For example, when the electronic device 1701 includes the main processor 1721 and the auxiliary processor 1723, the auxiliary processor 1723 may be adapted to consume less power than the main processor 1721, or to be specific to a specified function. The auxiliary processor 1723 may be implemented as separate from, or as part of the main processor 1721.

The auxiliary processor 1723 may control at least some of functions or states related to at least one component (e.g., the display module 1760, the sensor module 1776, or the communication module 1790) among the components of the electronic device 1701, instead of the main processor 1721 while the main processor 1721 is in an inactive (e.g., sleep) state, or together with the main processor 1721 while the main processor 1721 is in an active state (e.g., executing an application). According to an embodiment, the auxiliary processor 1723 (e.g., an image signal processor or a communication processor) may be implemented as part of another component (e.g., the camera module 1780 or the communication module 1790) functionally related to the auxiliary processor 1723. According to an embodiment, the auxiliary processor 1723 (e.g., the neural processing unit) may include a hardware structure specified for artificial intelligence model processing. An artificial intelligence model may be generated by machine learning. Such learning may be performed, e.g., by the electronic device 1701 where the artificial intelligence is performed or via a separate server (e.g., the server 1708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1730 may store various data used by at least one component (e.g., the processor 1720 or the sensor module 1776) of the electronic device 1701. The various data may include, for example, software (e.g., the program 1740) and input data or output data for a command related thereto. The memory 1730 may include the volatile memory 1732 or the non-volatile memory 1734.

The program 1740 may be stored in the memory 1730 as software, and may include, for example, an operating system (OS) 1742, middleware 1744, or an application 1746.

The input module 1750 may receive a command or data to be used by another component (e.g., the processor 1720) of the electronic device 1701, from the outside (e.g., a user) of the electronic device 1701. The input module 1750 may include, for example, a microphone, a mouse, a keyboard, a key (e.g., a button), or a digital pen (e.g., a stylus pen).

The sound output module 1755 may output sound signals to the outside of the electronic device 1701. The sound output module 1755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1760 may visually provide information to the outside (e.g., a user) of the electronic device 1701. The display module 1760 may include, for example, a display, a hologram device, or a projector and control circuitry to control a corresponding one of the display, hologram device, and projector. According to an embodiment, the display module 1760 may include a touch sensor adapted to detect a touch, or a pressure sensor adapted to measure the intensity of force incurred by the touch.

The audio module 1770 may convert a sound into an electrical signal and vice versa. According to an embodiment, the audio module 1770 may obtain the sound via the input module 1750, or output the sound via the sound output module 1755 or a headphone of an external electronic device (e.g., an electronic device 1702) directly (e.g., wiredly) or wirelessly coupled with the electronic device 1701.

The sensor module 1776 may detect an operational state (e.g., power or temperature) of the electronic device 1701 or an environmental state (e.g., a state of a user) external to the electronic device 1701, and then generate an electrical signal or data value corresponding to the detected state. According to an embodiment, the sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1777 may support one or more specified protocols to be used for the electronic device 1701 to be coupled with the external electronic device (e.g., the electronic device 1702) directly (e.g., wiredly) or wirelessly. According to an embodiment, the interface 1777 may include, for example, a high definition multimedia interface (HDMI), a universal serial bus (USB) interface, a secure digital (SD) card interface, or an audio interface.

A connecting terminal 1778 may include a connector via which the electronic device 1701 may be physically connected with the external electronic device (e.g., the electronic device 1702). According to an embodiment, the connecting terminal 1778 may include, for example, a HDMI connector, a USB connector, a SD card connector, or an audio connector (e.g., a headphone connector).

The haptic module 1779 may convert an electrical signal into a mechanical stimulus (e.g., a vibration or a movement) or electrical stimulus which may be recognized by a user via his tactile sensation or kinesthetic sensation. According to an embodiment, the haptic module 1779 may include, for example, a motor, a piezoelectric element, or an electric stimulator.

The camera module 1780 may capture a still image or moving images. According to an embodiment, the camera module 1780 may include one or more lenses, image sensors, image signal processors, or flashes.

The power management module 1788 may manage power supplied to the electronic device 1701. According to an embodiment, the power management module 1788 may be implemented as at least part of, for example, a power management integrated circuit (PMIC).

The battery 1789 may supply power to at least one component of the electronic device 1701. According to an embodiment, the battery 1789 may include, for example, a primary cell which is not rechargeable, a secondary cell which is rechargeable, or a fuel cell.

The communication module 1790 may support establishing a direct (e.g., wired) communication channel or a wireless communication channel between the electronic device 1701 and the external electronic device (e.g., the electronic device 1702, the electronic device 1704, or the server 1708) and performing communication via the established communication channel. The communication module 1790 may include one or more communication processors that are operable independently from the processor 1720 (e.g., the application processor (AP)) and supports a direct (e.g., wired) communication or a wireless communication. According to an embodiment, the communication module 1790 may include a wireless communication module 1792 (e.g., a cellular communication module, a short-range wireless communication module, or a global navigation satellite system (GNSS) communication module) or a wired communication module 1794 (e.g., a local area network (LAN) communication module or a power line communication (PLC) module). A corresponding one of these communication modules may communicate with the external electronic device via the first network 1798 (e.g., a short-range communication network, such as Bluetooth^{™}, wireless-fidelity (Wi-Fi) direct, or infrared data association (IrDA)) or the second network 1799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1792 may identify and authenticate the electronic device 1701 in a communication network, such as the first network 1798 or the second network 1799, using subscriber information (e.g., international mobile subscriber identity (IMSI)) stored in the subscriber identification module 1796.

The wireless communication module 1792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1792 may support a high-frequency band (e.g., the mmWave band) to achieve, e.g., a high data transmission rate. The wireless communication module 1792 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 1792 may support various requirements specified in the electronic device 1701, an external electronic device (e.g., the electronic device 1704), or a network system (e.g., the second network 1799). According to an embodiment, the wireless communication module 1792 may support a peak data rate (e.g., 20Gbps or more) for implementing eMBB, loss coverage (e.g., 1764dB or less) for implementing mMTC, or U-plane latency (e.g., 0.5ms or less for each of downlink (DL) and uplink (UL), or a round trip of 17ms or less) for implementing URLLC.

The antenna module 1797 may transmit or receive a signal or power to or from the outside (e.g., the external electronic device) of the electronic device 1701. According to an embodiment, the antenna module 1797 may include an antenna including a radiating element composed of a conductive material or a conductive pattern formed in or on a substrate (e.g., a printed circuit board (PCB)). According to an embodiment, the antenna module 1797 may include a plurality of antennas (e.g., array antennas). In such a case, at least one antenna appropriate for a communication scheme used in the communication network, such as the first network 1798 or the second network 1799, may be selected, for example, by the communication module 1790 (e.g., the wireless communication module 1792) from the plurality of antennas. The signal or the power may then be transmitted or received between the communication module 1790 and the external electronic device via the selected at least one antenna. According to an embodiment, another component (e.g., a radio frequency integrated circuit (RFIC)) other than the radiating element may be additionally formed as part of the antenna module 1797.

According to various embodiments, the antenna module 1797 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1701 and the external electronic device 1704 via the server 1708 coupled with the second network 1799. Each of the electronic devices 1702 or 1704 may be a device of a same type as, or a different type, from the electronic device 1701. According to an embodiment, all or some of operations to be executed at the electronic device 1701 may be executed at one or more of the external electronic devices 1702, 1704, or 1708. For example, if the electronic device 1701 should perform a function or a service automatically, or in response to a request from a user or another device, the electronic device 1701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1701. The electronic device 1701 may provide the outcome, with or without further processing of the outcome, as at least part of a reply to the request. To that end, a cloud computing, distributed computing, mobile edge computing (MEC), or client-server computing technology may be used, for example. The electronic device 1701 may provide ultra-low-latency services using, e.g., distributed computing or mobile edge computing. In another embodiment, the external electronic device 1704 may include an internet-of-things (IoT) device. The server 1708 may be an intelligent server using machine learning and/or a neural network. According to an embodiment, the external electronic device 1704 or the server 1708 may be included in the second network 1799. The electronic device 1701 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 1701 of FIG. 17 may be an example of an electronic device described with reference to FIGS. 1 to 16.

In an embodiment, a method of changing a screen and/or a visual object displayed on an electronic device based on a gesture associated with a folding axis may be required. As described above, according to an embodiment, an electronic device (e.g., an electronic device 101 of FIGS. 1 to 13 and/or an electronic device 1600 of FIG. 16) may comprise a first housing (e.g., a first housing 111 of FIGS. 1 to 13) and a second housing (e.g., a second housing 112 of FIGS. 1 to 13) rotatably coupled to the first housing and a third housing (e.g., a third housing 113 of FIGS. 1 to 13) rotatably coupled to the second housing, a flexible display (e.g., a flexible display 150 of FIGS. 1 to 14B) located on the housing, a first angle (e.g., a first angle 141 of FIGS. 1 to 13) between the first housing and the second housing and one or more sensors (e.g., a sensor 230 of FIG. 2) for identifying a state of the electronic device distinguished by a second angle (e.g., a second angle 142 of FIGS. 1 to 13) between the second housing and the third housing, a memory (e.g., a memory 220 of FIG. 2) for storing instructions and at least one processor (e.g., a processor 210 of FIG. 2) for accessing the memory and executing the instructions. The at least one processor may be configured to display a visual object (e.g., a visual object 170 of FIG. 1, a visual object 710 of FIG. 7, a visual object 810 of FIG. 8, visual objects 910 of FIG. 9, a soft keyboard 1010 of FIG. 10, and/or a visual object 1450 of FIGS. 14A and/or 14B) on the flexible display in an unfolded state of the first housing, the second housing, and the third housing. The at least one processor may be configured to change a display area of the visual object in response to a first state identified by a first angle between the first housing and the second housing or a second state identified by a second angle between the second housing and the third housing.

As described above, according to an embodiment, a method of the electronic device may include displaying the visual object on the flexible display of the electronic device in the unfolded state of the first housing, the second housing, and the third housing of the electronic device. The method may include changing the display area of the visual object in response to the first state identified by the first angle between the first housing and the second housing or the second state identified by the second angle between the second housing and the third housing.

As described above, according to an embodiment, an electronic device (e.g., the electronic device 101 of FIGS. 1 to 14B and/or the electronic device 1600 of FIG. 16) may comprise a foldable housing at least including a first housing, a second housing rotatably coupled to the first housing, a flexible display positioned on the foldable housing, one or more sensors for sensing a first angle between the first housing and the second housing, a memory for storing instructions, and at least one processor executing the instructions by accessing the memory. The at least one processor may be configured to identify a state of the electronic device based on the first angle. The at least one processor may be configured to, in an unfolded state of the foldable housing, when at least one application is executed, display at least one visual object on the flexible display that is associated with the executed application. The at least one processor may be configured to change visual characteristic of the at least one visual object in response to the first angle between the first housing and the second housing which is changed to be greater than or equal to a preset angle and returned to the unfolded state within a preset duration. In this manner, the visual characteristics of a visual object can be efficiently and dynamically adjusted through simplified user operation and interaction, thereby enhancing the user experience and the performance of the flexible display.

For example, the at least one processor may be configured to change the visual characteristic by changing at least one of a shape, a size, a location or a color of the at least one visual object or by replacing the at least one visual object to another visual object.

For example, the flexible display may be positioned on surfaces of at least three housings of the foldable housing including the first housing and the second housing.

For example, the at least one processor may be configured to identify, while displaying the visual object, a first gesture rotating the first housing with respect to the second housing such that a difference between the first angle and the preset angle is changed to be greater than a threshold angle. The at least one processor may be configured to, based on identifying a second gesture rotating the first housing with respect to the second housing such that the first angle is changed to the preset angle, wherein the second gesture is performed with a time difference shorter than a preset time difference with respect to the first gesture, change a position of the visual object on the flexible display to another position adjacent to an edge of the first housing.

For example, the at least one processor may be configured to identify, while displaying the visual object, a third gesture rotating a third housing with respect to the second housing such that a difference between a second angle between the second housing and the third housing rotatably coupled to the second housing and the preset angle is changed to be greater than the threshold angle. The at least one processor may be configured to, based on identifying a fourth gesture rotating the first housing with respect to the second housing such that the second angle is changed to the preset angle, wherein the fourth gesture is performed with a time difference shorter than the preset time difference with respect to the third gesture, change the position of the visual object on the flexible display to another position adjacent to another edge of the third housing associated with the second angle.

For example, the visual object may be a first visual object. The at least one processor may be configured to, while identifying the first gesture and the second gesture performed within the preset time difference, based on identifying the third gesture and fourth gesture performed within the preset time difference, display a second visual object associated with a first portion of the first visual object in a position adjacent to the edge of the first housing and display a third visual object associated with a second portion of the first visual object in a position adjacent to the edge of the third housing.

For example, the at least one processor may be configured to cease displaying the first visual object to represent division of the first visual object based on the second visual object and the third visual object.

For example, the at least one processor may be configured to display the visual object reduced to a second size less than a first size based on the other position in response to the first gesture and the second gesture sequentially performed according to the time difference while displaying the visual object having the first size extended from the first housing to the third housing crossing the second housing.

For example, the at least one processor may be configured to display the visual object having the first size by executing a software application within the first mode for using the entire active area of the flexible display. The at least one processor may be configured to display the visual object reduced to the second size by executing the software application within a second mode different from the first mode in response to the first gesture and the second gesture sequentially performed according to the time difference.

For example, the at least one processor may be configured to change the position of the visual object based on the edge of the first housing parallel to the folding axis between the first housing and the second housing.

For example, the at least one processor may be configured to display the visual object including the icons arranged along a direction of the folding axis at the other position based on sequentially identifying the first gesture and the second gesture while displaying the visual object including icons arranged along a direction perpendicular to the folding axis.

The at least one processor may be configured to move the visual object displayed at the other position to the position on the flexible display before identifying the first gesture, based on identifying a motion temporarily bending the flexible display, based on rotation of the first housing or the third housing with respect to the second housing.

For example, the at least one processor may be configured to change the position of the visual object to display the visual object at the other position adjacent to a body part performing the first gesture and the second gesture.

As described above, according to an embodiment, a method of an electronic device may comprise identifying a state of the electronic device based on a first angle between a first housing and a second housing of a foldable housing of the electronic device. The method may comprise, in an unfolded state of the foldable housing, displaying, when at least one application is executed, at least one visual object on a flexible display of the electronic device that is associated with the executed application. The method may comprise changing visual characteristic of the at least one visual object in response to the first angle between the first housing and the second housing which is changed to be greater than or equal to a preset angle and returned to the unfolded state within a preset duration. In this manner, the visual characteristics of a visual object can be efficiently and dynamically adjusted through simplified user operation and interaction, thereby enhancing the user experience and the performance of the flexible display.

For example, the method may comprise identifying, while displaying the visual object, a third gesture rotating the third housing with respect to the second housing such that a difference between a second angle between the second housing and the third housing rotatably coupled to the second housing and the preset angle is changed to be greater than a threshold angle. The method may comprise, based on identifying a fourth gesture rotating the third housing with respect to the second housing such that the second angle is changed to the preset angle, wherein the second gesture is performed with a time difference shorter than a preset time difference with respect to the third gesture, changing a position of the visual object on the flexible display to another position adjacent to another edge of third housing associated with the second angle.

For example, the visual object may be a first visual object. The method may comprise, while identifying the first gesture and the second gesture performed within the preset time difference, based on identifying the third gesture and fourth gesture performed within the preset time difference, displaying a second visual object associated with a first portion of the first visual object in a position adjacent to the edge of the first housing and displaying a third visual object associated with a second portion of the first visual object in a position adjacent to the edge of the third housing.

For example, the displaying the second visual object and the third visual object may comprise ceasing to display the visual object to represent division of the first visual object based on the second visual object and the third visual object.

For example, the displaying may comprise displaying the visual object having a first size extended from the first housing to the third housing crossing the second housing. The changing may comprise displaying the visual object of which a size is reduced to a second size smaller than the first size based on another position.

For example, the displaying may comprise displaying the visual object having the first size by executing a software application in a first mode for using entire active area of the flexible display. The changing may comprise displaying, in response to the first gesture and the second gesture sequentially performed according to the time difference, the visual object of which the size is reduced to the second size by executing the software application in a second mode different from the first mode.

For example, the changing may comprise changing the position of the visual object based on the edge of the first housing parallel to the folding axis between the first housing and the second housing.

For example, the changing may comprise displaying the visual object including the icons arranged along a direction of the folding axis at the other position based on sequentially identifying the first gesture and the second gesture while displaying the visual object including icons arranged along a direction perpendicular to the folding axis.

For example, the method may comprise moving the visual object displayed at the other position to the position on the flexible display before identifying the first gesture, based on identifying a motion temporarily bending the flexible display, based on rotation of the first housing or the third housing with respect to the second housing.

For example, the changing may comprise changing the position of the visual object to display the visual object at the other position adjacent to a body part performing the first gesture and the second gesture.

As described above, according to an embodiment, an electronic device may comprise a housing including a first housing, a second housing rotatably coupled to the first housing and a third housing rotatably coupled to the second housing, a flexible display extended from the first housing to the third housing crossing the second housing, one or more sensors, and at least one processor. The at least one processor may be configured to display, when directions of front surfaces of the first housing in which the flexible display is located, the second housing and the third housing are parallel to each other, a screen in entire active area of the flexible display. The at least one processor may be configured to identify, while displaying the screen including a visual object for receiving a touch input, based on the one or more sensors, at least one of first motion temporarily bending the first housing with respect to the second housing or second motion temporarily bending the third housing with respect to the second housing. The at least one processor may be configured to move, based on identifying the first motion among the first motion or the second motion, the visual object displayed based on center of the entire active area to a first position adjacent to an edge of the first housing. The at least one processor may be configured to move, based on identifying the second motion among the first motion or the second motion, the visual object displayed based on the center to a second position adjacent to an edge of the third housing. In this manner, the visual characteristics of a visual object can be efficiently, flexibly and dynamically adjusted through simplified user operation and interaction, thereby enhancing the user experience and the performance of the flexible display.

For example, the visual object may be the first visual object. The at least one processor may be configured to cease to display the first visual object displayed based on the center based on identifying both the first motion and the second motion. The at least one processor may be configured to display a second visual object associated with a first portion of the first visual object that has been displayed based on the center, based on the first position, and display a third visual object associated with a second portion of the first visual object based on the second position.

For example, the at least one processor may be configured to identify, based on the one or more sensors, the first motion including a first gesture changing an angle between the first housing and the second housing from a preset angle associated with an unfolded state to greater than a threshold angle, and a second gesture changing the angle to the preset angle which is performed according to a time difference shorter than a preset time difference from the first gesture.

For example, the at least one processor may be configured to identify, based on the one or more sensors, the second motion including a third gesture changing an angle between the second housing and the third housing from a preset angle associated with an unfolded state to greater than a threshold angle, and a fourth gesture changing the angle to the preset angle which is performed according to a time difference shorter than a preset time difference from the third gesture.

As described above, according to an embodiment, the method of the electronic device may comprise displaying, when directions of front surfaces of the first housing in which the flexible display of the electronic device is located, the second housing and the third housing are parallel to each other, a screen in entire active area of the flexible display. The method may comprise identifying, while displaying the screen including a visual object for receiving a touch input, based on the one or more sensors of the electronic device, at least one of first motion temporarily bending the first housing with respect to the second housing or second motion temporarily bending the third housing with respect to the second housing. The method may comprise moving, based on identifying the first motion among the first motion or the second motion, the visual object displayed based on center of the entire active area to a first position adjacent to an edge of the first housing. The method may comprise moving, based on identifying the second motion among the first motion or the second motion, the visual object displayed based on the center to a second position adjacent to an edge of the third housing. In this manner, the visual characteristics of a visual object can be efficiently, flexibly and dynamically adjusted through simplified user operation and interaction, thereby enhancing the user experience and the performance of the flexible display.

For example, the visual object may be the first visual object. The method may comprise ceasing to display the first visual object displayed based on the center based on identifying both the first motion and the second motion. The method may comprise displaying a second visual object associated with a first portion of the first visual object that has been displayed based on the center, based on the first position. The method may comprise displaying a third visual object associated with a second portion of the first visual object based on the second position.

For example, the identifying may comprise identifying, based on the one or more sensors of the electronic device, the first motion including a first gesture changing an angle between the first housing and the second housing from a preset angle associated with an unfolded state to greater than a threshold angle, and a second gesture changing the angle to the preset angle which is performed according to a time difference shorter than a preset time difference from the first gesture.

For example, the identifying may comprise, based on the one or more sensors of the electronic device, the second motion including a third gesture changing an angle between the second housing and the third housing from a preset angle associated with an unfolded state to greater than a threshold angle, and a fourth gesture changing the angle to the preset angle which is performed according to a time difference shorter than a preset time difference from the third gesture.

As described above, according to an embodiment, an electronic device may comprise a housing including a first housing, a second housing rotatably coupled to the first housing and a third housing rotatably coupled to the second housing, a flexible display extended from the first housing to the third housing crossing the second housing, one or more sensors, and at least one processor. The at least one processor may be configured to display, when directions of front surfaces of the first housing in which the flexible display is located, the second housing and the third housing are parallel to each other, screens on different portions of the flexible display, respectively. The at least one processor may be configured to identify, while displaying the screen, based on the one or more sensors, at least one of first motion temporarily bending the first housing with respect to the second housing or second motion temporarily bending the third housing with respect to the second housing. The at least one processor may be configured to increase, based on identifying the first motion among the first motion or the second motion, size of a first screen displayed on a first portion of the front surface of the first housing among the portions by size of the front surface of the first housing. The at least one processor may be configured to increase, based on identifying the second motion among the first motion or the second motion, size of a second screen displayed on a second portion different from the first portion by the size of the front surface of the first housing.

As described above, according to an embodiment, the method of the electronic device may comprise displaying, when directions of front surfaces of the first housing in which the flexible display of the electronic device is located, the second housing and the third housing are parallel to each other, screens on different portions of the flexible display, respectively. The method may comprise identifying, while displaying the screen, based on the one or more sensors of the electronic device, at least one of first motion temporarily bending the first housing with respect to the second housing or second motion temporarily bending the third housing with respect to the second housing. The method may comprise increasing, based on identifying the first motion among the first motion or the second motion, size of a first screen displayed on a first portion of the front surface of the first housing among the portions by size of the front surface of the first housing. The method may comprise increasing, based on identifying the second motion among the first motion or the second motion, size of a second screen displayed on a second portion different from the first portion by the size of the front surface of the first housing.

According to an embodiment, a multi-foldable electronic device may comprise a multi-foldable housing including a first housing including a first surface and a second surface, a second housing including a third surface and a fourth surface, rotatably coupled to one end of the first housing, and a third housing including a fifth surface and a sixth surface, rotatably coupled to the other end of the second housing, a flexible display disposed on the multi-foldable housing, at least one or more sensors for sensing a first angle between the first housing and the second housing or a second angle between the second housing and the third housing, a memory for storing executable instructions, and at least one processor that accesses the memory and executes the instructions. The at least one processor may be configured to display a visual object associated with the at least one executed application on the flexible display in response to executing at least one application in an unfolded state of the first housing, the second housing, and the third housing. The at least one processor may be configured to change a display area of the visual object in case that the first angle between the first housing and the second housing or the second angle between the second housing and the third housing is changed in the unfolded state. In this manner, the visual characteristics of a visual object can be efficiently, flexibly and dynamically adjusted through simplified user operation and interaction, thereby enhancing the user experience and the performance of the flexible display of the multi-foldable electronic device.

For example, the at least one processor may be configured to change the display area of the visual object in response to the first angle between the first housing and the second housing which is changed to be greater than or equal to a preset angle.

For example, the at least one processor may be configured to change the display area of the visual object in response to the second angle between the second housing and the third housing which is changed to be greater than or equal to a preset angle.

For example, the at least one processor may be configured to change the display area of the visual object in response to the first angle between the first housing and the second housing being changed to be greater than or equal to a preset angle and the first housing and the second housing being switched to an unfolded state.

For example, the at least one processor may be configured to move the display area of the visual object displayed on the flexible display on the fifth surface of the second housing to a position adjacent to an edge on the first housing on the flexible display.

For example, the at least one processor may be configured to change the display area of the visual object in response to the second angle between the second housing and the third housing being changed to be greater than or equal to a preset angle and the second housing and the third housing being switched to an unfolded state.

For example, the at least one processor may be configured to move the display area of the visual object displayed on the flexible display on the fifth surface of the second housing to a position adjacent to an edge on the third housing on the flexible display.

According to an embodiment, a method of a multi-foldable electronic device may comprise displaying a visual object associated with the at least one application on a flexible display on a first surface of the first housing, a second surface of the second housing, and a third surface of the third housing in response to executing at least one application in an unfolded state of the first housing, the second housing, and the third housing. The method may comprise changing a display area of the visual object in case that the first angle between the first housing and the second housing or the second angle between the second housing and the third housing is changed in the unfolded state.

For example, the changing may comprise changing the display area of the visual object in response to the first angle between the first housing and the second housing which is changed to be greater than or equal to a preset angle.

For example, the changing may comprise changing the display area of the visual object in response to the second angle between the second housing and the third housing which is changed to be greater than or equal to a preset angle.

For example, the changing may comprise changing the display area of the visual object in response to the first angle between the first housing and the second housing being changed to be greater than or equal to a preset angle and the first housing and the second housing being switched to an unfolded state.

For example, the changing may comprise moving the display area of the visual object displayed on the flexible display on the second surface of the second housing to a position adjacent to an edge on the first housing on the flexible display.

For example, the changing may comprise changing the display area of the visual object in response to the second angle between the first housing and the second housing being changed to be greater than or equal to a preset angle and the second housing and the third housing being switched to an unfolded state.

For example, the changing may comprise moving the display area of the visual object displayed on the flexible display on the second surface of the second housing to a position adjacent to an edge on the third housing on the flexible display.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

The present invention is defined by the appended set of claims. As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101), comprising:
a foldable housing at least including a first housing (111), a second housing (112) rotatably coupled to the first housing (111);
a flexible display (150) positioned on the foldable housing;
one or more sensors (230) for sensing a first angle (141) between the first housing (111) and the second housing (112);
a memory (220) for storing instructions; and
at least one processor (210) executing the instructions by accessing the memory (220), wherein the at least one processor (210) configured to:
identify a state of the electronic device (101) based on the first angle (141);
in an unfolded state of the foldable housing, when at least one application is executed, display at least one visual object (170; 710; 810; 910; 1010; 1450) on the flexible display (150) that is associated with the executed application;
change visual characteristic of the at least one visual object (170; 710; 810; 910; 1010; 1450) in response to the first angle (141) between the first housing (111) and the second housing (112) which is changed to be greater than or equal to a preset angle and returned to the unfolded state within a preset duration.

2. The electronic device (101) of claim 1, wherein the at least one processor (210) is configured to:
change the visual characteristic by changing at least one of a shape, a size, a location or a color of the at least one visual object (170; 710; 810; 910; 1010; 1450) or by replacing the at least one visual object (170; 710; 810; 910; 1010; 1450) to another visual object.

3. The electronic device (101) of claim 1, wherein the flexible display (150) is positioned on surfaces of at least three housings of the foldable housing including the first housing (111) and the second housing (112).

4. The electronic device (101) of claim 1 to claim 3, wherein the at least one processor (210) is configured to:
identify, while displaying the visual object (170; 710; 810; 910; 1010; 1450), a first gesture rotating the first housing (111) with respect to the second housing (112) such that a difference between the first angle (141) and the preset angle is changed to be greater than a threshold angle;
based on identifying a second gesture rotating the first housing (111) with respect to the second housing (112) such that the first angle (141) is changed to the preset angle, wherein the second gesture is performed with a time difference shorter than a preset time difference with respect to the first gesture, change a position of the visual object (170; 710; 810; 910; 1010; 1450) on the flexible display (150) to another position adjacent to an edge of the first housing (111).

5. The electronic device (101) of claim 4, wherein the at least one processor (210) is configured to:
identify, while displaying the visual object (170; 710; 810; 910; 1010; 1450), a third gesture rotating a third housing (113) with respect to the second housing (112) such that a difference between a second angle (142) between the second housing (112) and the third housing (113) rotatably coupled to the second housing (112) and the preset angle is changed to be greater than the threshold angle;
based on identifying a fourth gesture rotating the third housing (113) with respect to the second housing (112) such that the second angle (142) is changed to the preset angle, wherein the fourth gesture is performed with a time difference shorter than the preset time difference with respect to the third gesture, change the position of the visual object (170; 710; 810; 910; 1010; 1450) on the flexible display (150) to another position adjacent to another edge of the third housing (113) associated with the second angle (142).

6. The electronic device (101) of claim 1 to claim 5, wherein the visual object (170; 710; 810; 910; 1010; 1450) is a first visual object,
wherein the at least one processor (210) is configured to:
while identifying the first gesture and the second gesture performed within the preset time difference, based on identifying the third gesture and fourth gesture performed within the preset time difference, display a second visual object associated with a first portion of the first visual object in a position adjacent to the edge of the first housing (111) and display a third visual object associated with a second portion of the first visual object in a position adjacent to the edge of the third housing (113).

7. A method of an electronic device (101), comprising:
identifying a state of the electronic device (101) based on a first angle (141) between a first housing (111) and a second housing (112) of a foldable housing of the electronic device (101);
in an unfolded state of the foldable housing, displaying, when at least one application is executed, at least one visual object (170; 710; 810; 910; 1010; 1450) on a flexible display (150) of the electronic device (101) that is associated with the executed application;
changing visual characteristic of the at least one visual object (170; 710; 810; 910; 1010; 1450) in response to the first angle (141) between the first housing (111) and the second housing (112) which is changed to be greater than or equal to a preset angle and returned to the unfolded state within a preset duration.

8. The method of claim 7, further comprises:
identifying, while displaying the visual object (170; 710; 810; 910; 1010; 1450), a third gesture rotating the third housing with respect to the second housing (112) such that a difference between a second angle (142) between the second housing and the third housing rotatably coupled to the second housing (112) and the preset angle is changed to be greater than a threshold angle;
based on identifying a fourth gesture rotating the third housing with respect to the second housing (112) such that the second angle (142) is changed to the preset angle, wherein the second gesture is performed with a time difference shorter than a preset time difference with respect to the third gesture, changing a position of the visual object (170; 710; 810; 910; 1010; 1450) on the flexible display (150) to another position adjacent to another edge of third housing associated with the second angle (142).

9. The method of claim 7 to claim 8, wherein the visual object (170; 710; 810; 910; 1010; 1450) is a first visual object,
and the method further comprising:
while identifying the first gesture and the second gesture performed within the preset time difference, based on identifying the third gesture and fourth gesture performed within the preset time difference, displaying a second visual object associated with a first portion of the first visual object in a position adjacent to the edge of the first housing (111) and displaying a third visual object associated with a second portion of the first visual object in a position adjacent to the edge of the third housing.

10. The method of claim 9, wherein the displaying the second visual object and the third visual object comprises:
ceasing to display the visual object to represent division of the first visual object based on the second visual object and the third visual object.

11. The method of claim 7 to claim 10, wherein the displaying comprises:
displaying the visual object (170; 710; 810; 910; 1010; 1450) having a first size extended from the first housing (111) to the third housing crossing the second housing (112);
wherein the changing comprises:
displaying the visual object (170; 710; 810; 910; 1010; 1450) of which a size is reduced to a second size smaller than the first size based on another position.

12. The method of claim 7 to claim 11, wherein the displaying comprises:
displaying the visual object (170; 710; 810; 910; 1010; 1450) having the first size by executing a software application in a first mode for using entire active area of the flexible display (150);
wherein the changing comprises:
displaying, in response to the first gesture and the second gesture sequentially performed according to the time difference, the visual object (170; 710; 810; 910; 1010; 1450) of which the size is reduced to the second size by executing the software application in a second mode different from the first mode.

13. An electronic device (101), comprising:
a multi-foldable housing including a first housing (111), a second housing (112) rotatably coupled to the first housing (111) and a third housing (113) rotatably coupled to the second housing (112);
a flexible display (150) extended from the first housing (111) to the third housing (113) crossing the second housing (112);
one or more sensors (230); and
at least one processor (210), wherein the at least one processor (210) configured to:
display, when directions of front surfaces of the first housing (111) in which the flexible display (150) is located, the second housing (112) and the third housing (113) are parallel to each other, a screen in entire active area of the flexible display (150);
identify, while displaying the screen including a visual object (170; 710; 810; 910; 1010; 1450) for receiving a touch input, based on the one or more sensors (230), at least one of first motion temporarily bending the first housing (111) with respect to the second housing (112) or second motion temporarily bending the third housing (113) with respect to the second housing (112):
move, based on identifying the first motion among the first motion or the second motion, the visual object (170; 710; 810; 910; 1010; 1450) displayed based on center of the entire active area to a first position adjacent to an edge of the first housing (111);
move, based on identifying the second motion among the first motion or the second motion, the visual object (170; 710; 810; 910; 1010; 1450) displayed based on the center to a second position adjacent to an edge of the third housing (113).

14. The electronic device (101) of claim 13, wherein the visual object (170; 710; 810; 910; 1010; 1450) is a first visual object,
wherein the at least one processor (210) is configured to:
cease to display the first visual object displayed based on the center based on identifying both the first motion and the second motion;
display a second visual object associated with a first portion of the first visual object that has been displayed based on the center, based on the first position, and display a third visual object associated with a second portion of the first visual object based on the second position.

15. the electronic device (101) of claim 13 to claim 14, wherein the at least one processor (210) is configured to:
identify, based on the one or more sensors (230), the first motion including a first gesture changing an angle between the first housing (111) and the second housing (112) from a preset angle associated with an unfolded state to greater than a threshold angle, and a second gesture changing the angle to the preset angle which is performed according to a time difference shorter than a preset time difference from the first gesture.
